(19) **Europäisches Patentamt / European Patent Office / Office européen des brevets**

(11) **EP 1 455 118 A1**

(12) **EUROPEAN PATENT APPLICATION**
published in accordance with Art. 158(3) EPC

(43) Date of publication:
**08.09.2004 Bulletin 2004/37**

(51) Int Cl.⁷: **F16H 25/20**, B23B 31/165,
B23B 31/26

(21) Application number: **01275012.1**

(22) Date of filing: **14.12.2001**

(86) International application number:
**PCT/JP2001/010987**

(87) International publication number:
**WO 2003/052297 (26.06.2003 Gazette 2003/26)**

(84) Designated Contracting States:
**AT BE CH CY DE DK ES FI FR GB GR IE IT LI LU MC NL PT SE TR**

(71) Applicant: **MITSUBISHI DENKI KABUSHIKI KAISHA**
**Chiyoda-ku Tokyo 100-8310 (JP)**

(72) Inventor: **Ikai, Yoshihiro**
**Mitsubishi Denki Kabushiki Kaisha**
**Tokyo 100-8310 (JP)**

(74) Representative: **HOFFMANN - EITLE**
**Patent- und Rechtsanwälte**
**Arabellastrasse 4**
**81925 München (DE)**

(54) **THRUST CONVERTER**

(57)    A thrust converter has a connection pipe 30 for outputting reciprocating motion of first rotation/reciprocation conversion means 115 and a joint nut 28. The joint nut 28 is interposed between the first rotation/reciprocation conversion means 115 and the connection pipe 30, connected to the first rotation/reciprocation conversion means 115, and coupled to the connection pipe 30 with a screw. The thrust converter is constructed such that connection pipe 30 is driven by a second servo motor 31, thereby setting an arbitrary position where the joint nut 28 and the connection pipe 30 are to be coupled together. As a result, there is obtained a thrust converter which can shorten the axial length of the thrust converter in comparison with a required stroke, which obviates a necessity for operating two motors synchronously when a workpiece is fed to a gripping position or the like, and which facilitates motor control.

FIG. 1

**Description**

Technical Field

The invention primarily relates to a thrust converter to be used for driving a clamper which clamps a tool and a workpiece in various industrial machines, such as an injection molding machine having dies, a diecast machine, an extruder, or a press working apparatus; a thrust converter for driving a die of a powder sintering apparatus; a thrust converter for driving a work chuck of a lathe or a tool chuck of a machining center; and a thrust converter for pressure-welding and driving a friction welder.

Background Art

Many power sources employing thrust generated by a hydraulic or pneumatic cylinder are adopted as a power source for a press working machine or a power source for a chuck of a machine tool or the like which grips a workpiece.

In the case of the press working machine or the chuck, which adopt a hydraulic or pneumatic cylinder, thrust is determined by the pressure which can be generated by the hydraulic or pneumatic apparatus, and the diameter of the cylinder. Therefore, if great thrust is required, the hydraulic or pneumatic apparatus must be changed to another apparatus having larger capacity, which adds to costs. Thus, various problems arise.

A reduction gear using gears as a torque increase (or torque reduction) mechanism is available. The reduction gear usually takes a rotational input and produces a rotational output after having amplified (or reduced) the rotational input. Amplifying (or reducing) an axial input (thrust) and producing an axial output (or thrust) requires a combination of mechanical components, such as various gears, and by extension the reduction gear is rendered bulky. Further, reaction force is exerted on a bearing which rotationally supports gears, which in turn presents a problem of shortening the life of the reduction gear or the like. For this reason, a desire has existed for an inexpensive, compact, simple, and long-life thrust converter capable of outputting amplifying (reducing) an axial input (thrust) and producing an axial output.

In the case of a chuck described in, e.g., JP-A-62-34708, use of a reduction gear adopting a gear mechanism for amplifying rotational torque of a motor requires an electromagnetic clutch for disconnecting a drawbar drive system from a rotational system of a main shaft during machining of a workpiece, which results in an increase in the number of components and adds to costs.

In the electromagnetic chuck, a workpiece is clamped by imparting axial thrust to the drawbar. However, during machining of a workpiece, a bearing for rotationally supporting the drawbar receives all reaction force of the axial thrust. Hence, an increase in the rotational speed of the main shaft and an increase in gripping force stemming from an increase in axial thrust of the drawbar yield various problems of drastically shortening the life of the bearing.

In order to solve those problems of the related art, a thrust converter such as that shown in Fig. 6 has been put forth (for further information about this converter, see JP-T-01-51239).

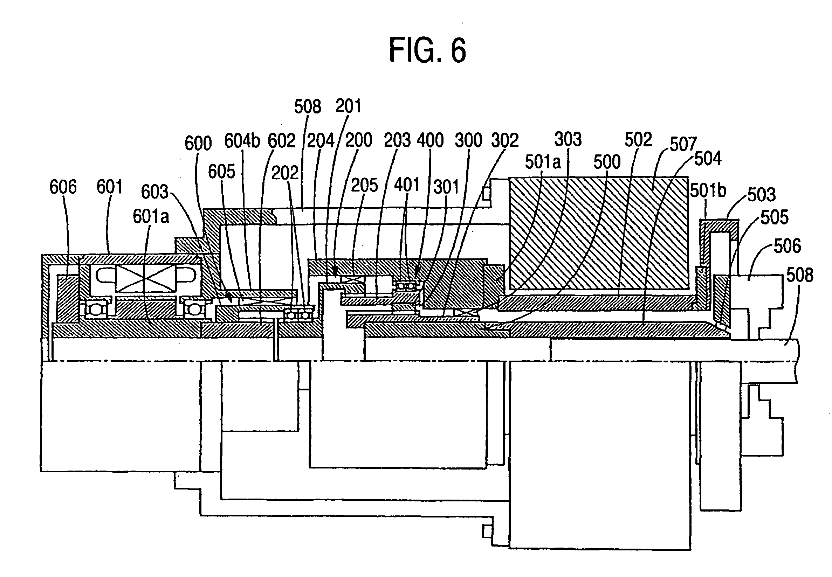

Fig. 6 is a fragmentary transverse cross-sectional view of a chuck to which the thrust converter is applied.

In Fig. 6, reference numeral 600 designates motor rotation/reciprocation conversion means. The motor rotation/reciprocation conversion means 600 comprises a servo motor 601; a motor shaft 601a; a third screw shaft 602 fixed to a load-side end of the motor shaft 601a; a third nut 603 to be screw-engaged with the third screw shaft 602; a motor-load-side end bracket 604b; and a third linear guide 605 for locking the third nut 603 with a detent so that the nut can move in only an axial direction with respect to the motor-load-side end bracket 604b. A motor rotational position detection section 606 serving as means for detecting a rotational position of a motor is disposed at a counter-load-side end of the motor shaft 601a.

Reference numeral 200 designates reciprocation/rotation conversion means. A non-screw portion of a first nut 201 extending toward a motor-side end thereof is supported by a non-screw portion of the third nut 603 extending toward a non-motor side end thereof, so as to be rotatable and axially unmovable by way of a first bearing 202. The reciprocation/rotation conversion means 200 is constituted of a first screw shaft 203 to be screw-engaged with the first nut 201, a main rotary shaft 204, and a first linear guide 205 which locks the first nut 201 with a detent so that the nut 201 can move in only the axial direction with respect to the main rotary shaft 204.

Reference numeral 300 designates rotation/reciprocation conversion means. The rotational reciprocating means 300 is constituted of a second nut 301 secured on the inside of the first screw shaft 203; and a second linear guide 303 which locks a second screw shaft 302 to be screw-engaged with the second nut 301 through use of a detent so that the screw shaft can move in only the axial direction. A push-pull rod 500 is fastened to the extremity of the second screw shaft 302.

Reference numeral 400 designates a reaction force receiving section. The reaction force receiving section 400 is constituted of the main rotary shaft 204, the first screw shaft 203, and a first bearing 401 which supports the first screw shaft 203 on the main rotary shaft 204 so as to allow rotation and prevent axial motion.

A rear end of a main shaft 502 is fixed to the load-side of the main rotary shaft 204 via an adapter 501a. A drawbar 504 is inserted into the axial center of the main shaft 502 so as to be axially movable. The extremity of the drawbar 504 is engaged with a chuck claw 506 by way of an operation conversion mechanism 505. The operation conversion mechanism 505 converts axial operation of the drawbar 504 into radial operation of the chuck claw 506 by means of a cam lever or a taper. The rear end of the draw bar 504 is fixed to the extremity of the push-pull rod 500.

The motor 601 and a main shaft motor section 507 are fixed by way of a mount frame 508. By means of such a construction, the rotation/reciprocation conversion means 600, the reciprocation/rotation conversion means 200, the rotation/reciprocation conversion means 300, the reaction force receiving section 400, and a second ball bearing 202 are supported by the main shaft motor section 507.

Operation of the chuck will now be described by reference to Fig. 6.

In the chuck drive apparatus having the foregoing construction, when the motor shaft 601a is rotated at predetermined rotational torque, the third screw shaft 602 fixed to the load-side-end of the motor shaft 601a is also rotated. The rotational torque of the third screw shaft 602 is converted into thrust of axial motion of the third nut 603.

When the third nut 603 has been moved axially, the first nut 201, which is supported by the third nut 603 so as to be rotatable but axially unmovable via the second ball bearing 202, is also moved axially by means of axial thrust of the third nut 603.

When the first nut 201 is axially pushed, the first screw shaft 203 screw-engaged with the first nut 201 is rotated, because the first nut 201 is locked by a detent so that the first nut 201 can move in only the axial direction by means of the first linear guide 205. The thrust of axial motion of the first nut 201 is converted into rotational torque of rotational motion of the first screw shaft 203.

When the first screw shaft 203 is rotated, the second nut 301 secured on the inside of the first screw shaft 203 is also rotated. Since the second screw shaft 302 is locked with a detent so as to be movable in only the axial direction by the second linear guide 303, the second screw shaft 302 to be screw-engaged with the second nut 301 is axially moved. As a result, the rotational motion torque of the second nut 301 is converted into thrust of axial motion of the second screw shaft 302.

When the second screw shaft 302 is axially moved, the push-pull rod 500 secured on the second screw shaft 302 is axially moved. The drawbar 504 fastened to the push-pull rod 500 is axially moved with the same thrust. The axial motion is converted into radial motion of the chuck claw 506, whereby the workpiece 508 is gripped by the chuck.

When the main shaft 502 is rotated by the main shaft motor section 507 after the workpiece 508 has been gripped by the chuck claw 506, the drawbar 504, the chuck 503, the operation conversion mechanism 505, the workpiece 508, the adapters 501a, 501b, the push-pull rod 500, the rotation/reciprocation conversion means 300, and the reciprocating conversion means 200 are all rotated, thereby cutting the workpiece 508.

Since the first nut 201 of the rotation/reciprocation conversion means 200 is rotatably supported by the bearing 202 of the third nut 603 of the motor rotation/reciprocation conversion means 600, the motor rotation reciprocating means 600 does not rotate even when the main shaft 502 is rotated.

Given that rotational torque of rotational motion of the motor rotary shaft 601a and that of the third screw shaft 602 are taken as TM; that thrust for axially pressing toward the third nut 603 is taken as F1; that a screw lead of the third . nut 603 is taken as L1; and that a rotation/reciprocation conversion efficiency is taken as η, we have

$$F1 = \frac{2\pi \cdot TM \cdot \eta}{L1} \qquad \text{(Eq. 1)}.$$

When the first nut 201 is pressed by the axial thrust of the third nut 603, the first screw shaft 203 screw-engaged with the first nut 201 is rotated. As a result, the thrust of axial motion of the first nut 201 is converted into rotational torque of rotational motion of the first screw shaft 203.

Given that the thus-obtained thrust which presses the first nut 201 is taken as F1; that the rotational torque of the first screw shaft 203 is taken as T2; that the lead of the first nut 201 is taken as L2; and that the reciprocation/rotation conversion efficiency is taken as η2, we have

$$T2 = \frac{L2 \cdot F1 \cdot \eta 2}{2\pi} \qquad \text{(Eq. 2)}.$$

When the first screw shaft 203 is rotated, the second nut 301 fixed on the inside of the first screw shaft 203 is also rotated. The second screw shaft 302 screw-engaged with the secondnut 301 is axiallymoved. As a result, the rotational torque of the second nut 301 is converted into thrust of axial motion of the second screw shaft 302.

Given that rotational torque of rotational motion of the first screw shaft 203 and that of the second nut 301 are taken as T2; that thrust of axially motion of the second screw shaft 302 is taken as F3; that a screw lead of the second screw shaft 302 is taken as L3; and that a rotation/reciprocation conversion efficiency is taken as η3, we have

$$F3 = \frac{2\pi \cdot T2 \cdot \eta 3}{L3} \qquad \text{(Eq. 3)}.$$

The axial thrust imparted from the servo motor 601 to the first nut 201 is taken as F1, and the axial thrust developing in the second screw shaft 302 is taken as F3. From Equations 2 and 3, the following relationship is established.

$$\frac{F3}{F1} = \frac{L2}{L3}\eta c \qquad \text{(Eq. 4)}$$

where ηc is a motion conversion efficiency of a screw.

When the second screw shaft 302 is constructed with a screw lead of L2>L3, the thrust F3 developing in the second screw shaft 302 is generated by converting the thrust F1 into amplified thrust; that is, by multiplying the F1 thrust by (L2/L3)•ηc. Thrust of great axial motion can be exerted on the push-pull rod 500 through use of the servo motor 601 having small thrust.

When the push-pull rod 500 and the drawbar 504 are axially moved toward the counter-load-side by means of the amplified thrust F3, the axial operation is converted into the radial operation of the chuck claw 506 by the operation conversion mechanism 505, whereupon the workpiece 508 is gripped by the chuck 503 with the amplified gripping force.

As is evident from Eq. 4, in order to generate the greater thrust F3 with the smaller rotational torque TM, the lead L2 of the first nut 201 is to be increased. For example, under the assumption that the motion conversion efficiency of the screw is taken as 100% and that L2=100 mm and L3=1 mm, the thrust F1 is amplified 100 times. However, under the assumption that a stroke of the drawbar 504 required to open and close the chuck claw 506 is 15 mm, the second nut 301 must be rotated 15 rotations in order to move the second screw shaft 302 over 15 mm.

Accordingly, in order to rotate the second nut 301 15 rotations, the first screw shaft 203 must be rotated 15 rotations. Since the lead L2 of the first nut 201 is 100 mm, the first nut 201 requires a length which enables motion of 1500mm, thereby resulting in an increase in the axial length of the thrust converter.

A thrust converter such as that shown in Fig. 7 (Application No. PCT/JP01/01033) has already been proposed. This example shows a thrust converter which has been conceived to solve the problem and which can shorten the axial length of a thrust conversion section in accordance with a required stroke ratio.

In this example, the thrust converter is applied to a cylinder to be used for opening and closing a chuck claw of an NC lathe. In subsequent drawings, a right-side shows a load side, and a left-side shows a counter-load-side.

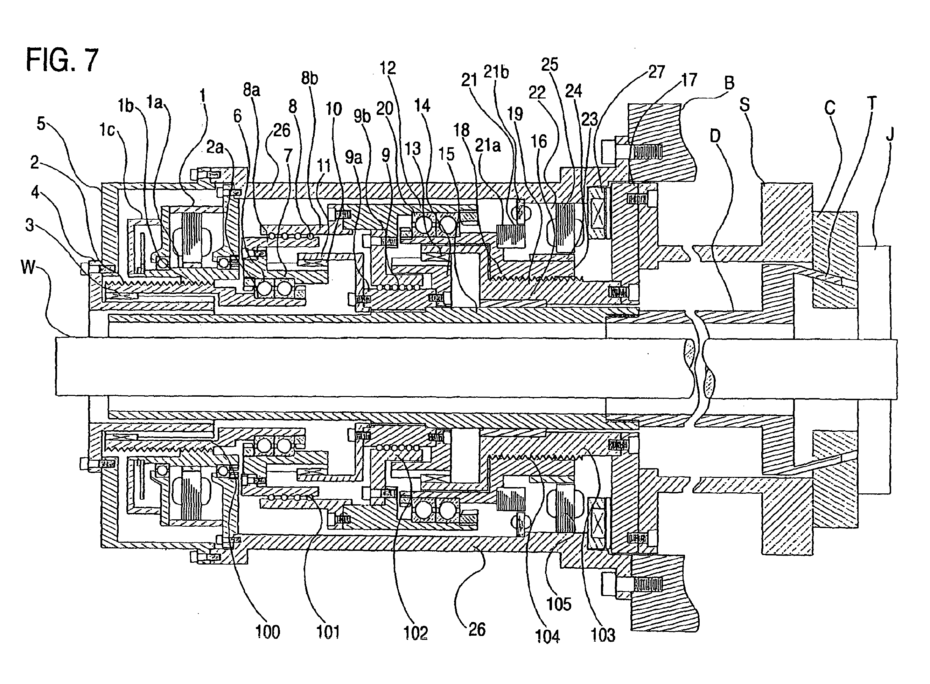

In Fig. 7, reference numeral 100 designates reciprocating motion means. The reciprocating motion means is constituted of a first servo motor 1 having a motor rotary shaft 1a with a third nut 1b; a third screw shaft 2 to be screw-engaged with a third nut 1b of the motor rotary shaft 1a; a third linear guide 3 which locks the third screw shaft 2 with a detent so as to allow motion in only an axial direction; a guide bush 4 which supports the third linear guide 3; and a rear frame 5 supporting the guide bush 4. Here, the motor rotation/reciprocation conversion means is constituted of the motor rotary shaft 1a, the third screw shaft 2, and the third linear guide 3.

A rotation detector 1c serving as means for detecting rotational position of the motor rotary shaft 1a is disposed at the counter-load-side end of the motor rotary shaft 1a.

Reference numeral 101 designates reciprocation/rotation conversion means. The reciprocation/rotation conversion means 101 comprises a bearing housing 7 supported on a bearing journal section 2a provided at a counter-motor-side end of the third screw shaft 2 by way of a first ball bearing 6, so as to be rotatable and axially unmovable; a first screw shaft 8a supported on the shaft bearing 7; a first nut 8b screw-engaged with the first screw shaft 8a; a first linear guide 10 which locks the first screw shaft 8a with a detent so as to allow motion in only the axial direction with respect to a second screw shaft 9a; and a first guide housing 11 which connects the first linear guide 10 to the second screw shaft 9a.

Reference numeral 102 designates rotation/reciprocation conversion means, and the rotation reciprocating means 102 comprises a housing 12 secured on the first nut 8b; a second nut 9b which is secured on the housing 12 and whose thread section is located on the inside of the first nut 8b; a second screw shaft 9a to be screw-engaged with the second nut 9b; a second linear guide 13 which locks the second screw shaft 9a so as to be movable only in the axial direction; and a guide mount 14 for connecting the second screw shaft 9a to the second linear guide 13.

Here, the hollow push-pull rod 15 is fixed to the second screw shaft 9a.

Reference numeral 103 designates reaction force receiving means. The reaction force receiving means 103 comprises a main rotary shaft 16; a bracket 17 for connecting the main rotary shaft 16 to a main shaft S of the lathe; coupling means 104 constituted of a joint nut 18 serving as a first thread formed on an outer peripheral section of the main shaft 16 and a joint screw shaft 19 which is to be screw-engaged with the joint nut 18 and serves as the first thread; and a second ball bearing 20 which supports a joint screw shaft 19 on the housing 12 so as to allow rotation but not axial motion.

Here, the coupling means 104 is formed from a screw defined by a relationship tanβ2<μ2, provided that a screw lead angle of the joint screw shaft 19 is taken as β2 and a frictional coefficient of the screw is taken as μ2.

Reference numeral 105 designates drive means. The drive means 105 is constituted of a second servo motor 22 having a rotational position detector 21, and a motor rotary shaft 23 which is disposed at the outside of the joint nut 18 and is rotatably supported by the bearing 20. A permanent magnet 24 is disposed at the outside of the motor rotary shaft 23 so as to oppose a stator 25 of the second servo motor 22.

A relationship L2+ST≤L1 is established between the axial length L1 of the permanent magnet 24, a required feed stroke ST, and the axial length L1 of the stator 25. In order to make the motor 22 less expensive, a dimension of part of the motor which does not contribute to generation of torque is reduced to a minimum.

An electromagnetic brake 27 is fixed to a frame 26, and a part of the bracket 17 is taken as a brake panel.

The screw of the reciprocating motion means 100, that of the reciprocation/rotation conversion means 101, and that of the rotation/reciprocation conversion means 102 are formed such that the second screw shaft 9a finally moves in the axial direction toward the counter-load-side when the third screw shaft 2 has moved toward the counter-load-side. As is evident from the drawings, the reciprocating motion means 100, the reciprocation/rotation conversion means 101, the rotation/reciprocation conversion means 102, and the drive means 105 are aligned along a single axis.

The bracket 17 is provided on the load-side of the main rotary shaft 16, and the rear end of the main shaft S is fixed to the bracket 17. A chuck C is secured at the extremity of the main shaft S. A drawbar D is inserted into a hollow axial center of the main shaft S so as to be axially movable. The extremity of the drawbar D is joined to a chuck claw J via an operation conversion mechanism T. Further, the rear end of the drawbar D is fixed to the leading edge of the push-pull rod 15.

The main shaft S is driven by an unillustrated main shaft motor. The main shaft S is finally rotatably supported by the bearing 6 and rotates in conjunction with the chuck C, the main rotary shaft 16, the drawbar D, the push-pull rod 15, the joint nut 18, the joint screw shaft 19, the second screw shaft 9a, the second nut 9b, the first nut 8b, the first screw shaft 8a, and other components.

The first servo motor 1 and the drive means 105 are fixed on the frame 26, and the frame 26 is fixed on a headstock B.

Operation of the thrust converter will now be described by reference to Fig. 7. First, gripping operation to be performed until the chuck claw J grips a workpiece W of the drive means 105 will be described.

First, the joint screw shaft 19 is restrained in a nonrotatable state by the electromagnetic brake 27. Subsequently, the second servo motor 22 is operated, thereby spinning the motor rotary shaft 23. The joint nut 18 is formed on the motor rotary shaft 23, and hence the joint nut 18 performs rotational reciprocating motion in association with rotation of the motor rotary shaft 23. At this time, the first servo motor 1 is also driven, and the rotation/reciprocation conversion means 102, the reciprocation/rotation conversion means 101, and the third screw shaft 2 are reciprocally moved in synchronism with reciprocating motion of the joint nut 18. As a result, gripping action or releasing action can be carried out without rotation of the first nut 8b.

In association with motion of the rotation/reciprocation conversion means 102, the push-pull rod 15 and the drawbar D are moved toward the counter-load-side. The operation conversion mechanism T converts the axial motion of the push-pull rod 15 and that of the drawbar D into the radial motion of the chuck claw J, whereupon the chuck C grips the workpiece W.

After the chuck C has gripped the workpiece W, operation of the second servo motor 22 is stopped. When the first servo motor 1 is continuously driven by predetermined rotational torque, the third screw shaft 2 screw-engaged with the third nut 1b fixed on the motor rotary shaft 1a is moved toward the counter-load-side, because the third screw shaft 2 is locked on the guide bush 4 by means of the linear guide 3. As a result of the third screw shaft having been moved, the reciprocation/rotation conversion means 101 including the first screw shaft 8a is also moved similarly. When the reciprocating rotation means 101 has been moved toward the counter-load-side, the first screw shaft 8a is pulled.

Given that rotational torque of rotational motion of the motor rotary shaft 1a and that of the third nut 1b are taken as TM; that thrust which axially pulls toward the third screw shaft 2 is taken as F1; that a screw lead of the third screw shaft 2 is taken as L1; and that a rotation/reciprocation conversion efficiency is taken as η, we have

$$F1 = \frac{2\pi \cdot TM \cdot \eta}{L1} \qquad \text{(Eq. 1).}$$

When the first screw shaft 8a is pulled, the first nut 8b screw-engaged with the first screw shaft 8a is rotated. As a result, the thrust of axial motion of the first screw shaft 8a is converted into the rotational torque of rotational motion of the first nut 8b.

Given that the thrust which pulls the first screw shaft 8a is taken as F1; that the rotational torque of the first nut 8b is taken as T2; that the lead of the first screw shaft 8a is taken as L2; and that the reciprocation/rotation conversion efficiency is taken as η2, we have

$$T2 = \frac{L2 \cdot F1 \cdot \eta2}{2\pi} \qquad \text{(Eq. 2).}$$

When the first nut 8b has rotated, the second nut 9b fixed on the inside of the first nut 8b (i.e., at a position close to the center line of the main shaft) is also rotated, whereby the second screw shaft 9a screw-engaged with the second nut 9b is axially moved toward the counter-load-side. As a result, the rotational motion torque of the second nut 9b is converted into thrust of axial motion of the second screw shaft 12.

Given that rotational torque of rotational motion of the first nut 8b and that of the second nut 9b are taken as T2; that thrust of axially motion of the second screw shaft 12 is taken as F3; that a screw lead of the second screw shaft 9a is taken as L3; and that a rotation/reciprocation conversion efficiency is taken as η3, we have

$$F3 = \frac{2\pi \cdot T2 \cdot \eta3}{L3} \qquad \text{(Eq. 3).}$$

The thrust of axial motion imparted from the first servo motor to the first shaft 8a is taken as F1, and the axial thrust developing in the second screw shaft 9a is taken as F3. From Equations 2 and 3, the following relationship is established.

$$\frac{F3}{F1} = \frac{L2}{L3}\eta c \qquad \text{(Eq. 4)}$$

where ηc is a motion conversion efficiency of a screw.
When the second screw shaft 9a is constructed with a screw lead of L2>L3, the thrust F3 developing in the second screw shaft 9a is generated by converting the thrust F1 into amplified thrust; that is, by multiplying the F1 thrust by (L2/L3)•ηc. Thrust of great axial motion can be exerted on the push-pull rod 15 through use of the servo motor 1 having small thrust.
When the push-pull rod 23 and the drawbar D are axially moved toward the counter-load-side by means of the amplified thrust F3, the axial operation of the push-pull rod 23 and that of the drawbar D are converted into the radial operation of the chuck claw J by the operation conversion mechanism T, whereupon the workpiece W is gripped by the chuck C with amplified gripping force.
As is evident from Eq. 4, in order to generate the greater thrust F3 with the smaller rotational torque TM, the lead L2 of the first screw shaft 8a is to be increased. For example, under the assumption that the motion conversion efficiency of the screw is taken as 100% and that L2=100 mm and L3=1 mm, the thrust F1 is amplified 100 times. However, under the assumption that a stroke of the drawbar D required to open and close the chuck claw J is 15 mm, the second nut 9b must be rotated 15 rotations in order to move the second screw shaft 12 over 15 mm.
Accordingly, in order to rotate the second nut 9b 15 rotations, the first nut 8b must be rotated 15 rotations. Since the lead L2 of the first screw shaft 6 is 100 mm, the first nut 8b requires a length which enables motion of 1500 mm.
As mentioned previously, the drive means 105 operates in synchronism with the first servo motor 1, to thereby enable the rotation/reciprocation conversion means 102, the reciprocation/rotation conversion means 101, or the like to move without rotation of the first nut 8b. Hence, there is no necessity for rotating the first nut 8b 15 rotations.
In order to grip the workpiece W with required gripping force, the torque TM of the first servo motor is converted into the large thrust F. However, the chuck claw Jhas already gripped the workpiece W over the stroke during which the torque TM is to be converted into the thrust F. Therefore, only a nominal stroke is sufficient. For instance, if a stroke of 0.1 mm is required, the second nut 9b is to rotate 0.1 rotations. Hence, the first nut 8b requires only a stroke corresponding to 10 mm.
Consequently, the axial length of the thrust converter can be significantly shortened.
Next, when the main shaft S finally supported by the bearing 6 is rotated by a main shaft motor (not shown) while the second servo motor 22 is held stationary (the first servo motor can also be stopped if the second screw 9 is embodied by a slide screw), as mentioned above, the drawbar D, the chuck C, the rotation/reciprocation conversion means 102, the reciprocation/rotation conversion means 101, the reaction force receiving means 103, and the coupling means 104 are rotated in conjunction, thereby cutting the workpiece W.
Asmentionedabove, the screw is formed froma screwdefined by a relationship tanβ1<μ1, provided that a screw lead angle of the second screw 9 is taken as β1 and a frictional coefficient of the screw is taken as μ1. At this time, the screw satisfying the conditional equation assumes a negative (-) conversion efficiency at the time of conversion of thrust into rotational torque. Rotational torque can be converted into axial thrust by imparting rotational torque to the screw. However, axial thrust cannot be converted into rotational torque by imparting axial thrust to the screw.
Specifically, the second nut 9b is rotated at predetermined torque, thereby enabling conversion of rotational torque into thrust of axial motion of the second screw shaft 9a screw-engaged with the second nut 9b which is locked with a detent. However, even when thrust of axial motion is imparted to the second screw shaft 9a, the second nut 9b cannot rotate.
Even in relation to the coupling means 104, since the screw is formed from a screw defined by a relationship tanβ2<μ2, provided that a screw lead angle of the joint screw shaft 19 is taken as β2 and a frictional coefficient of the screw is taken as μ2, even when thrust is axially imparted from the main shaft S to the joint nut 18, the joint nut 18 cannot rotate.
This signifies the following. Under the assumption that relationships between the lead angles of the screws and the frictional coefficients thereof are defined as tanβ1<μ1 and tanβ2<μ2, even when the power of the first servo motor is cut during machining of the work, the drawbar D imparting force to the chuck claw J in the direction in which the chuck claw grips the workpiece does not axially move toward the load side. Namely, the force of the chuck claw J required to grip the work does not drop.
Immediately after completion of cutting of the workpiece W, there is performed an operation for releasing the workpiece W from the chuck claw J. The motor rotary shaft 1a of the first servo motor 1 is reversely rotated at predetermined torque. The push-pull rod 15 is slightly moved axially toward the load side through the reverse of the previously-described operation for gripping the workpiece, thereby loosening the chuck claw J.

Next, the second servo motor 22 is again operated while the electromagnetic brake 27 is held in a braking state. The motor rotary shaft 23 is rotated, thereby rotating the third nut 1b in synchronism with reciprocating motion of the joint nut 18. The rotation/reciprocation conversion means 102, the reciprocation/rotation conversion means 101, and the third screw shaft 2 are moved axially toward the load side.

In the case of the thrust converter shown in Fig. 7, the axial length of the thrust converter can be shortened in comparison with a required stroke. However, when the workpiece is fed to a gripping position or a release position; namely, when the push-pull rod 15 is axially moved by driving the second servo motor 22, the axial motion of the reciprocation/rotation conversion means 101 or the like must be absorbed by a screw joint section of the reciprocating motion means 100 (i.e., a screw joint section existing between the third nut 1b and the third screw shaft 2) by means of additionally driving the first servo motor 1 so that the reciprocation/rotation conversion means can be moved axially. Specifically, there is a necessity for operating the first servo motor 1 and the second servo motor 22 synchronously, and difficulty is encountered in controlling the motors.

Moreover, since the first and second servo motors 1 and 22 must be operated synchronously, each of the servo motors requires a motor drive amplifier, which poses difficulty in cost reduction.

Disclosure of the Invention

The invention is to solve the problem, and a feature of the invention is to provide a thrust converter which can shorten the axial length of the thrust converter in comparison with a required stroke, which obviates a necessity for operating two motors synchronously when a workpiece is fed to a gripping position or the like, and which facilitates motor control.

Another feature of the invention is to provide a thrust converter capable of integrating motor drive amplifiers.

Other features of the invention will become evident from descriptions of the best mode for implementing the invention described later.

The invention has been conceived to yield the features and provides a thrust converter comprising reciprocating motion means; reciprocation/rotation conversion means for converting reciprocating motion of the reciprocating motion means into rotational motion; first rotation/reciprocation conversion means for converting rotational motion of the reciprocation/rotation conversion means into reciprocating motion; reaction force receiving means for receiving reaction force of reciprocating motion of the first rotation/reciprocation conversion means; output means for outputting reciprocating motion of the first rotation/reciprocation conversion means; coupling means interposed between the first rotation/reciprocation conversion means and the output means; and arbitrary position setting means which drives the output means separately from driving force stemming from reciprocating motion of the first rotation/reciprocation conversion means and which sets an arbitrary position where the coupling means and the output means are to be coupled together.

According to the invention, the reciprocating motion means comprises a motor having a rotor, and second rotation/reciprocation conversion means for converting rotational motion of a rotation axis of the motor into reciprocating motion.

Further, according to the invention, a power source of the reciprocating motion means is disposed along an axis offset from an axial center line of the output means; a reciprocating section of the reciprocating motion means is disposed in line with the axial center line of the output means; and drive force of the drive source of the reciprocating motion means is transmitted to the reciprocating section of the reciprocating motion means by way of thrust transmission means.

Further, according to the invention, the reciprocating motion means comprises a motor having a rotor, disposed along an axis offset from an axial center line of the output means; second rotation/reciprocation conversion means for converting rotational motion of the motor into reciprocating motion; a reciprocating section disposed in line with the axial center line of the output means; and thrust transmission means which is interposed between the second rotation/reciprocation conversion means and the reciprocating section and which transmits drive force of the motor to the reciprocating section.

Further, according to the invention, the thrust transmission means has a cam follower or a roller follower.

Further, according to the invention, the coupling means is a screw member which is connected to the first rotation/reciprocation conversion means and screw-connected to the output means.

Further, according to the invention, the coupling means is an annular wedge member which is connected to the first rotation/reciprocation conversion means and which clamps and unclamps the output means.

Further, according to the invention, the arbitrary position setting means has a motor having a rotor, and rotational motion conversion means which converts rotational motion of the rotational axis of the motor such that the output means performs reciprocating motion and which transmits the converted motion to the output means.

Further, according to the invention, a power source of the arbitrary position setting means is disposed along an axis offset from an axial center line of the output means; and drive force of the drive source of the arbitrary position setting means is transmitted to the reciprocating section of the output means by way of thrust transmission means.

Further, according to the invention, the arbitrary position settingmeans comprises a motor which is disposed along an axis offset from an axial center line of the output means and has a rotor; rotational motion conversion means which converts rotational motion of a rotary shaft of the motor such that the output means performs reciprocating motion and which transmits the converted motion to the output means; and thrust transmission means which is interposed between the motor and the rotational motion conversionmeans and which transmits drive force of the motor to the rotational motion conversion means.

Further, according to the invention, the arbitrary position setting means is a linear motor.

Further, according to the invention, the output means comprises first output means to be coupled with the arbitrary position setting means; second output means supported by the first output means by way of rotatable support means; and rotation prevention means which is interposed between the reaction force receivingmeans and second output means, prevents rotation of the second output means, and enables axial motion of the second output means.

Further, according to the invention, the reciprocating motion means and arbitrary position setting means are controlled by a single drive controller; and the thrust converter further comprises a changeover switch for sequentially selectively driving between the reciprocatingmotionmeans and the arbitrary position setting means by sequential switching connection to the drive controller.

Further, according to the invention, a drive source for the reciprocating motion means and a drive source for arbitrary position setting means are embodied by a single drive source; clutch means is provided in a drive power transmission path of the drive source for the reciprocatingmeans and the arbitrary position setting means, wherein drive force of the drive source is transmitted to arbitrary means from among the reciprocating motion means and the arbitrary position setting means by activating and deactivating the clutch means.

Further, according to the invention, the clutch means are embodied as electromagnetic clutches; the electromagnetic clutches are provided in the drive power transmission path of the drive source for the reciprocating means motion and the arbitrary position setting means, respectively; and the thrust converter further comprises a clutch changeover switch for alternately supplying power to the electromagnetic clutch provided in a drive path of the reciprocating motion means and to the electromagnetic clutch provided in a drive path of the arbitrary position setting means.

The invention also provides a thrust converter comprising: reciprocating motion means having a first motor with a rotor and second rotation/reciprocation conversion means for converting rotational motion of the first motor into reciprocating motion; reciprocation/rotation conversion means for converting reciprocating motion of the reciprocating motion means into rotational motion; first rotation/reciprocation conversion means which converts rotational motion of the reciprocating rotational conversion means into reciprocating motion; reaction force receiving means for receiving reaction force of reciprocating motion performed by the first reciprocating rotational conversion means; an output shaft for outputting reciprocal motion of the first rotational/reciprocating conversion means; a screw member which is interposed between the first rotation/reciprocation conversion means and the output shaft, is connected to the first rotation/reciprocation conversion means, and is coupled to the output shaft with a screw; a second motor with a rotator; rotational motion conversion means which converts rotational motion of a rotary shaft of the second motor such that the output means performs rotational reciprocating motion and which transmits the convertedmotion to the output shaft; and arbitrary position setting means which has drives the output shaft through use of the second motor and sets an arbitrary position where the screw member and the output shaft are to be coupled together.

The invention further provides a thrust converter comprising: reciprocating motion means having a first motor with a rotor and second rotation/reciprocation conversion means for converting rotational motion of the first motor into reciprocating motion; reciprocation/rotation conversion means for converting reciprocating motion of the reciprocating motion means into rotational motion; first rotation/reciprocation conversion means which converts rotational motion of the reciprocating/rotational conversion means into reciprocating motion; reaction force receiving means for receiving reaction force of reciprocating motion performed by the first rotational conversion means; an output shaft for outputting reciprocal motion of the first rotational motion reciprocating conversion means; a screw member which is interposed between the first rotation/reciprocation conversion means and the output shaft, is connected to the first rotation/reciprocation conversion means, and is coupled to the output shaft with a screw; a second motor with a rotator; rotational motion conversion means which converts rotational motion of a rotary shaft of the second motor such that the output shaft performs rotational reciprocating motion and which transmits the converted motion to the output shaft; arbitrary position setting means which drives the output shaft through use of the second motor and sets an arbitrary position where the screwmember and the output shaft are to be coupled together, wherein the first motor of the reciprocating motion means and the second motor of the arbitrary position setting means are disposed such that a rotary shaft of the first motor and a rotary shaft of the second motor are in parallel with an axial center line of the output shaft and located at different axial positions;andthrusttransmission meansfortransmitting drive force of the first motor and drive force of the second motor to the reciprocation/rotation conversion means and the output shaft, respectively.

The invention further provides a thrust converter comprising: reciprocating motion means; reciprocation/rotation conversion means for converting reciprocating motion of the reciprocating motion means into rotational motion; first rotation/reciprocation conversion means for converting rotational motion of the reciprocation/rotation conversion means into reciprocating motion; reaction force receiving means for receiving reaction force of reciprocating motion of the first rotation/reciprocation conversion means; an output shaft for outputting reciprocal motion of the first rotational/reciprocating conversion means; a screw member which is interposed between the first rotation/reciprocation conversion means and the output shaft, is connected to the first rotation/reciprocation conversion means, and is coupled to the output shaft with a screw; arbitrary position setting means which drives the output means separately from driving force stemming from reciprocating motion of the first rotation/reciprocation conversion means and which sets an arbitrary position where the screw member and the output shaft are to be coupled together; a drive source for the reciprocating motion means and a drive source for arbitrary position setting means being embodied by a single drive source; and clutch means provided in a drive power transmission path of the drive source for the reciprocating motion means and the arbitrary position setting means, wherein drive force of the drive source is transmitted to arbitrary means from among the reciprocating motion means and the arbitrary position setting means by activating and deactivating the clutch means.

The invention further provides a thrust converter comprising: reciprocating motion means having a first motor with a rotor and second rotation/reciprocation conversion means for converting rotational motion of the first motor into reciprocating motion; reciprocation/rotation conversion means for converting reciprocating motion of the reciprocating motion means into rotational motion; first rotation/reciprocation conversion means which converts rotational motion of the reciprocating rotational conversion means into reciprocating motion; reaction force receiving means for receiving reaction force of reciprocating motion performed by the first reciprocating rotational conversion means; an output shaft for outputting reciprocal motion of the first rotational/reciprocating conversion means; an annular wedge member which is interposed between the first rotation/reciprocation conversion means and the output shaft, is connected to the first rotation/reciprocation conversion means, and clamps and unclamps the output shaft; and a linear motor which is driven while the output shaft is released from the annular wedge member and sets an arbitrary position where the annular wedge member and the output shaft are to be coupled together.

Brief Description of the Drawings

Fig. 1 is a longitudinal cross-sectional view of a first embodiment of the invention;
Fig. 2 is a longitudinal cross-sectional view of a second embodiment of the invention;
Fig. 3 is a longitudinal cross-sectional view of a third embodiment of the invention;
Fig. 4 is a longitudinal cross-sectional view of a fourth embodiment of the invention;
Fig. 5 is a cross-sectional view taken along line A-A shown in Fig. 4;
Fig. 6 is a longitudinal cross-sectional view of a typical conventional electric cylinder for a chuck; and
Fig. 7 is a longitudinal cross-sectional view of a typical electric cylinder for a chuck of two motor synchronization type.

Best Mode for Carrying Out the Invention

First Embodiment

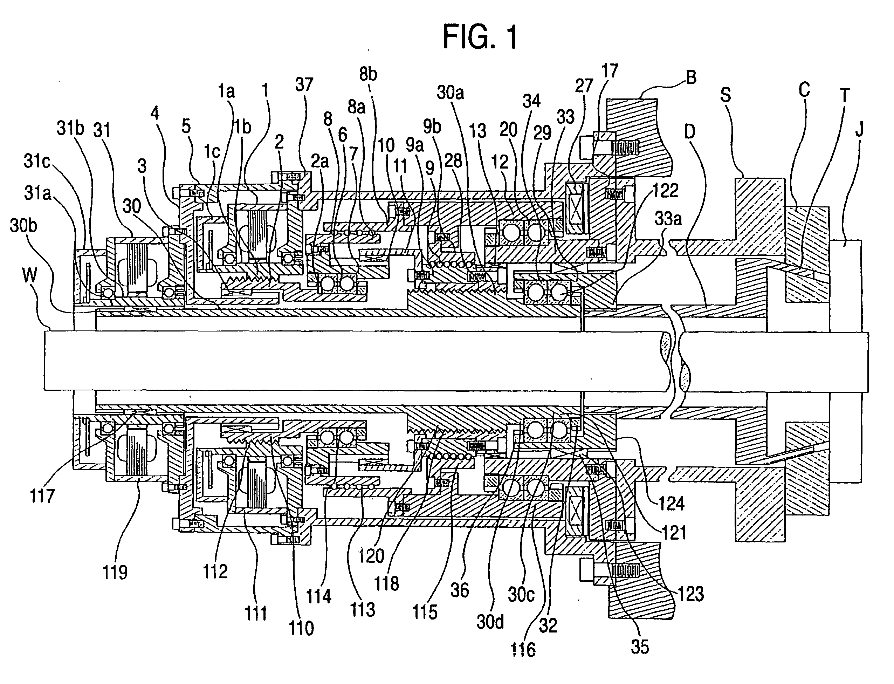

A thrust converter according to a first embodiment of the invention will be described by reference to Fig. 1.

The first embodiment is an example in which the thrust converter of the first embodiment is applied to a drive source for opening and closing a chuck claw of anNC lathe. In subsequent drawings, a right-side shows a load side (i.e., a main shaft of a lathe), and a left-side shows a counter-load-side.

In Fig. 1, reference numeral 110 designates reciprocating motion means. The reciprocating motion means is constituted of first rotating motion means 111 and second rotation/reciprocation conversion means 112. Here, the first rotating motion means 111 has a first servo motor 1 with a motor rotary shaft 1a equipped with a third nut 1b. The second rotation/reciprocation conversion means 112 comprises a third screw shaft 2 which is screw-engaged with the third nut 1b of the motor rotary shaft 1a and serves as a reciprocating section; a third linear guide 3 which locks the third screw shaft 2 with a detent so as to allow motion in only an axial direction; a guide bush 4 which supports the third linear guide 3; and a rear frame 5 supporting the guide bush 4.

A rotation detector 1c serving as means for detecting rotational position of the motor rotary shaft 1a is disposed at the counter-load-side end of the motor rotary shaft 1a. Here, the rotation detector 1c is based on the same principle as that on which a known rotation detector operates. However, in view of mechanical construction, the rotation detector has a special construction; that is, an opening is formed in the center of the detector so as to enable penetration of a workpiece W through the center.

Reference numeral 113 designates reciprocation/rotation conversion means. The reciprocation/rotation conversion means 113 comprises a bearing housing 7 supported on a bearing journal section 2a provided at a counter-motor-side end of the third screw shaft 2 by way of a first ball bearing 6 serving as rotatable coupling means 114, so as tobe rotatable and axially unmovable; a first screw shaft 8a supported on the shaft bearing 7; a first nut 8b screw-engaged with the first screw shaft 8a; a first linear guide 10 which locks the first screw shaft 8a with a detent so as to allow motion in only the axial direction with respect to a second screw shaft 9a; and a first guide housing 11 which connects the first linear guide 10 to the second screw shaft 9a.

Reference numeral 115 designates first rotation/reciprocation conversion means. The first rotation reciprocating means 115 comprises a housing 12 secured on the first nut 8b; a second nut 9b which is secured on the housing 12 and whose thread section is located on the inside of the first nut 8b (i.e., at a position close to the axial center line); a second screw shaft 9a to be screw-engaged with the second nut 9b; a second linear guide 13 which locks the second screw shaft 9a so as to allow movement only in the axial direction; and a joint nut 28 for connecting the second screw shaft 9a to the second linear guide 13. Here, a slide guide mechanism, such as a spline, may be used for the second linear guide 13.

Reference numeral 116 designates react ion force receiving means. The reaction force receiving means 116 comprises a main shaft 29; a bracket 17 for connecting the main shaft 29 to a main shaft S of the lathe; and a second ball bearing 20 which supports the housing 12 so as to allow rotation but not axial motion.

Reference numeral 118 designates coupling means. The coupling means 118 comprises the joint nut 28 secured on the second screw shaft 9a with a screw, and a joint screw shaft 30a which is to be screw-engaged with the joint nut 28 and disposed at an outer edge of the connection pipe 30, wherein the connection pipe 30 serves as first output means and constitutes an output shaft.

Reference numeral 117 designates arbitrary position setting means. The arbitrary position setting means 117 comprises second rotating motion means 119 and rotating motion conversion means 120. The second rotating motion means 119 is constituted of a second servo motor 31 having a motor rotary shaft 31b, wherein a spline hole 31a is formed in the motor rotary shaft 31b. A rotation detector 31c is disposed on the counter-load-side end of the motor shaft 31b for detecting the rotational position of the motor.

The second servo motor 31 is secured on the rear frame 5. The rotation detector 31c is based on the same principle as that on which a known rotation detector operates. However, in view of mechanical construction, the rotation detector has a special construction;

that is, an opening is formed in the center of the detector so as to enable penetration of a workpiece W through the center.

The rotatingmotion conversionmeans 120 comprises a joint screw shaft 30a of the connection pipe 30; the joint nut 28 screw-engaged with the joint screw shaft 30a; the spline shaft 30b formed into the connection pipe 30; and the spline hole 31a of the second servo motor 31 which locks the spline shaft 30b with a detent so as to enable motion in only an axial direction.

An end shoulder section 30d of the connection pipe 30 and a third bearing nut 32, in conjunction with the connection pipe 30, constitute first output means 121, wherein the third bearing nut 32 is screw-engaged with the extremity of the connection pipe 30 such that a third ball bearing 34 is fastened between the end shoulder section 30d and the third bearing nut 32.

Reference numeral 122 designates rotatable support means. The rotatable support means 122 comprises a thirdbearing j ournal section 30c provided at the load-side end of the connection pipe 30; a third ball bearing 34 for receiving reaction force; and a connector 33 for housing the third ball bearing 34. As a result, the rotatable supportmeans 122 supports the connection pipe 30 and also causes the connector 33 to enable only rotation of the connection pipe 30 and restrain axial motion of the same.

Reference numeral 124 designates second output means constituting output means (an output shaft) in conjunction with the first output means 121. The second output means 124 comprises rotation prevention means 123, a connector 33 to be connected to a drawbar D, and a third bearing screw 36 which is screw-engaged with the connector 33 and fastens the third ball bearing 34 between the connector 33 and the third bearing nut 35.

The rotation prevention means 123 corresponds to the main shaft 29 and a fourth linear guide 35 which locks the connector with a detent so as to enable rotation in only the axial direction with respect to the main shaft 29. The fourth linear guide 35 may utilize a slide guide, such as a spline.

The first servo motor 1 and the rear frame 5 are fastened to the frame 37. The frame 37 is fixed to a headstock B. The electromagnetic brake 27 is fixed to the frame 37, and a portion of the bracket 17 is taken as a brake panel.

The screw of the reciprocating motion means 110, that of the reciprocation/rotation conversion means 113, and that of the first rotation/reciprocation conversion means 115 are formed such that the second screw shaft 9a finally moves in the axial direction toward the counter-load-side when the third screw shaft 2 has moved toward the counter-load-side. As is evident from Fig. 1, the reciprocating motion means 110, the reciprocation/rotation conversion means 113, the first rotation/reciprocation conversion means 115, and the arbitrary position setting means 117 are aligned along a single axis.

The bracket 17 is provided on the load-side of the main shaft 29, and the rear end of the main shaft S is fixed to the bracket 17. A chuck C is secured at the extremity of the main shaft S. The drawbar D is fixed to the extremity 33a of the connector so as to be axially movable and is inserted into a hollow axial center of the main shaft S. The extremity of the drawbar D is joined to a chuck claw J via an operation conversion mechanism T.

The main shaft S is driven by an unillustrated main shaft motor. The main shaft S is finally rotatably supported by the bearing 6 and rotates in conjunction with the chuck C, the main shaft 29, the drawbar D, the connector 33, the third ball bearing 34, the joint nut 28, the connection pipe 30, the second screw 9, the first screw 8, the motor rotary shaft 31b, and other components.

Operation of the first embodiment will now be described by reference to Fig. 1.

First, gripping operation to be performed by the arbitrary position setting means 117 until the chuck claw J grips a workpiece W will be described.

Namely, the electromagnetic brake 27 is energized, thereby restricting rotation of the bracket 17. Rotation of the main shaft 29 fixed on the bracket 17 is also restricted. As a result, the joint nut 28 — which is made movable relative to the main shaft 29 solely in the axial direction by the linear guide 13 — is held in an nonrotatable and restricted state. Subsequently, the second servo motor 31 is operated, thereby rotating the motor rotary shaft 31b. At that time, the first servo motor 1 is not operated. The spline hole 31a is formed in the motor rotary shaft 31b, and rotational force is transmitted to the connection pipe 30 that is connected to the motor rotary shaft 31b bymeans of a spline. Since the connection pipe 30 has the joint screw shaft 30a, the connection pipe 30 performs reciprocating operation while being accompanied by rotation. At this time, the connection pipe 30 is freely rotatable by virtue of the third ball bearing 34 provided at the extremity of the connection pipe 30. In addition, the connector 33 is locked by the fourth linear guide 35, and hence motion of the connector 33 is converted into only axial motion without involvement of rotation.

In association with motion of the connection pipe 30, the connector 33 and the drawbar D are moved toward the counter-load-side. By means of the operation conversion mechanism T, axial motion of the connector 33 and that of the drawbar D are converted into radial motion of the chuck claw J, whereby the workpiece W is gripped by the chuck C.

After the chuck C has gripped the workpiece W, operation of the second servo motor 31 is stopped. The electromagnetic brake 27 is released, thereby activating the first servo motor 1. When the first servo motor 1 is rotated at predetermined rotational torque, the third screw shaft 2 screw-engaged with the third nut 1b formed on the motor rotary shaft 1a is moved toward the counter-load-side, because the third screw shaft 2 is locked on the guide bush 4 by means of the linear guide 3. As a result of motion of the third screw shaft 2, the reciprocation/rotation conversion means 113 including the first screw shaft 8a is also moved in the same manner. When the reciprocation/rotation conversion means 113 has been moved toward the counter-load-side, the first screw shaft 8a is pulled.

Given that rotational torque of rotational motion of the motor rotary shaft 1a and that of the third nut 1b are taken as TM; that thrust which axially pulls toward the third screw shaft 2 is taken as F1; that a screw lead of the third screw shaft 2 is taken as L1; and that a rotation/reciprocation conversion efficiency is taken as η, we have

$$F1 = \frac{2\pi \cdot TM \cdot \eta}{L1} \qquad \text{(Eq. 1).}$$

When the first screw shaft 8a is pulled, the first nut 8b screw-engaged with the first screw shaft 8a is rotated. As a result, the thrust of axial motion of the first screw shaft 8a is converted into the rotational torque of rotational motion of the first nut 8b.

Given that the thrust which pulls the first screw shaft 8a is taken as F1; that the rotational torque of the first nut 8b is taken as T2; that the lead of the first screw shaft 8a is taken as L2; and that the reciprocation/rotation conversion efficiency is taken as η2, we have

$$T2 = \frac{L2 \cdot F1 \cdot \eta2}{2\pi} \qquad \text{(Eq. 2).}$$

When the first nut 8b has rotated, the second nut 9b fixed on the inside of the first nut 8b (i.e., at a position close to the center line of the main shaft) is also rotated, whereby the second screw shaft 9a screw-engaged with the second nut 9b is axially moved toward the counter-load-side. As a result, the rotational motion torque of the second nut 9b is converted into thrust of axial motion of the second screw shaft 9a.

Given that rotational torque of rotational motion of the first nut 8b and that of the second nut 9b are taken as T2; that thrust of axially motion of the second screw shaft 9a is taken as F3; that a screw lead of the second screw shaft 9a is taken as L3; and that a rotation/reciprocation conversion efficiency is taken as η3, we have

$$F3 = \frac{2\pi \cdot T2 \cdot \eta3}{L3} \qquad \text{(Eq. 3).}$$

The thrust of axial motion imparted from the first servo motor to the first shaft 8a is taken as F1, and the axial thrust developing in the second screw shaft 9a is taken as F3. From Equations 2 and 3, the following relationship is established.

$$\frac{F3}{F1} = \frac{L2}{L3}\eta c \qquad \text{(Eq. 4)}$$

where $\eta c$ is a motion conversion efficiency of a screw.

When the second screw shaft 9a is constructed with a screw lead of L2>L3, the thrust F3 developing in the second screw shaft 9a is generated by converting the thrust F1 into amplified thrust; that is, by multiplying the thrust F1 by (L2/L3)•$\eta c$. Thrust of great axial motion can be eventually exerted on the connector 33 through use of the first servo motor 1 having small thrust.

When the joint nut 28, the connection pipe 30, the connector 33, and the drawbar D are axially moved toward the counter-load-side by means of the amplified thrust F3, the axial operation of the joint nut 28, that of the connection pipe 30, that of the connector 33, and that of the drawbar D are converted into the radial operation of the chuck claw J by the operation conversion mechanism T, whereupon the workpiece W is gripped by the chuck C with amplified gripping force.

Next, when the main shaft S finally supported by the bearing 6 is rotated by a main shaft motor (not shown) while the first servo motor 1 is held stationary, as mentioned before, the drawbar D, the chuck C, the second output means 124, the rotation prevention means 123, the rotatable support means 122, the first output means 121, the rotating motion conversion means 120, the coupling means 118, the first rotation/ reciprocation conversion means 115, the reciprocation/ rotation conversion means 113, and the reaction force receiving means 116 are rotated in conjunction, thereby cutting the workpiece W.

As mentioned above, the screw is formed from a screw defined by a relationship tan$\beta$1<$\mu$1, provided that a screw lead angle of the second screw shaft 9a is taken as $\beta$1 and a frictional coefficient of the screw is taken as $\mu$1. At this time, the screw satisfying the conditional equation assumes a negative (-) conversion efficiency at the time of conversion of thrust into rotational torque. Rotational torque can be converted into axial thrust by imparting rotational torque to the screw. However, axial thrust cannot be converted into rotational torque by imparting axial thrust to the screw.

Specifically, the second nut 9b is rotated at predetermined torque, thereby enabling conversion of rotational torque into thrust of axial motion of the second screw shaft 9a screw-engaged with the second nut 9b which is locked with a detent. However, even when thrust of axial motion is imparted to the second screw shaft 9a, the second nut 9b cannot rotate.

The screw is formed from a screw defined by a relationship tan$\beta$2<$\mu$2, provided that a screw lead angle of the joint screw shaft 30a is taken as $\beta$2 and a frictional coefficient of the screw is taken as $\mu$2. Hence, even when thrust is axially imparted from the main shaft S to the joint nut 18, the joint screw shaft 30a cannot rotate, also in the coupling means 118.

This signifies the following. Under the assumption that relationships between the lead angles of the screws and the frictional coefficients thereof are defined as tan$\beta$1<$\mu$1 and tan$\beta$2<$\mu$2, even when the power of the first servo motor is cut duringmachining of the workpiece, the drawbar D imparting force to the chuck claw J in the direction in which the chuck claw grips the workpiece does not axially move.toward the load side. Namely, the force of the chuck claw J requires to grip the workpiece does not drop.

After completion of cutting of the workpiece W, there is performed an operation for releasing the workpiece W from the chuck claw J. The motor rotary shaft 1a of the first servo motor 1 is reversely rotated at predetermined torque. The joint nut 28, the connection pipe 30, the connector 33, and other components are slightly moved axially toward the load side through the reverse of the previously-described operation for gripping the workpiece, thereby loosening the chuck claw J.

Next, the second servo motor 31 is again operated while the electromagnetic brake 27 is held in an energized state. The motor rotary shaft 31b is rotated, thereby rotating the connection pipe 30, whereupon the second output means 124, the rotatable support means 122, the rotation prevention means 123, the first output means 121, the coupling means 118, and other components are axially moved toward the load side.

As has been described, according to the first embodiment, the axial length of the thrust converter can be shortened in comparison with required stroke. When the workpiece is fed to a gripping position, there is no necessity for synchronously driving the two motors 1, 31. Thus, there can be obtained a thrust converter which is characterized by simple motor control.

The coupling means 118 is constituted of the joint nut 28 that is connected to the first rotation/reciprocation conversion means 115 and screw-engaged with the connection pipe 30. Hence, even when reaction force is applied to the thrust converter, the thrust converter can continuously receive reaction force without being loosened.

The output means has the connection pipe 30 to be driven by the second servo motor 31 and the connector 33 supported on the connection pipe 30 by way of the third ball bearing 34. Further, the fourth linear guide 35, which prevents rotation of the connector 33 and enables axial motion of the same, is provided between the reaction force receiving means 116 and the connector 33. Hence, reciprocating motion can be effected without driving the drawbar D fixed to the connector 33.

The first screw 8 and the second screw 9, which are rotated in conjunction with the main shaft and have large mass, are sturdily supported on the main shaft 29 by way of the second ball bearing 20. Hence, offset developing in the core of the thrust converter is smaller than that developing in the conventional thrust converter which supports the screws with a feed screw and has been described by reference to Fig. 7. Hence, the thrust converter is advantageous for high-speed rotation.

Although in the first embodiment the first servo motor 1 having a rotor is used as a drive source of the reciprocating motion means 110, a linear motor or a cylindrical linear motor may also be employed. In this case, the second rotation/reciprocation conversion means 112 becomes obviated.

Second Embodiment

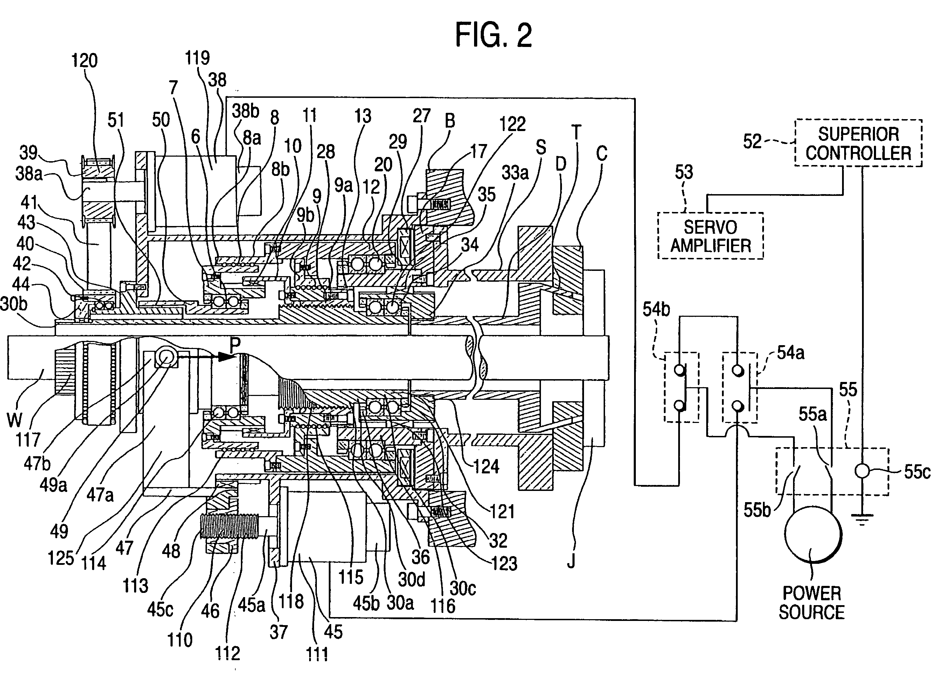

A second embodiment of the invention will now be described by reference to Fig. 2.

In the embodiment, the first rotating motion means 111 and the second rotating motion means 119 are disposed at different axial positions.

In Fig. 2, reference numeral 117 designates arbitrary position setting means. The arbitrary position setting means 117 comprises the second rotating motion means 119 and the rotating motion conversion means 120. The second rotating motion means 119 is constituted of the second servo motor 38 fixed on the frame 37. The second servo motor 38 is disposed such that the center line of a motor rotary shaft 38a of the second servo motor 38 is in parallel with the center line of the connection pipe 30 and located at a different axial position.

The rotating motion conversion means 120 comprises a drive pulley 39 fixed to the motor rotary shaft 38a of the second servo motor 38; a follower pulley 40; a timing belt 41 for transmitting drive force; a fourth bearing 42 which supports the follower pulley 40 so as to allow rotation but not axial movement; an axle 43 which is disposed such that a center line of the axle 43 is in line with the center line of the connection pipe 30 and which supports the bearing 42; a spline nut 44 which transmits the drive force output from the follower pulley 40 to the spline shaft 30b; the spline shaft 30b of the connection pipe 30; the joint screw shaft 30a; and the joint nut 28 screw-engaged with the joint screw shaft 30a.

Reference numeral 110 designates reciprocating motion means. The reciprocating motion means 110 is constituted of first rotating motion means 111, the second rotation/reciprocation conversion means 112, thrust transmission means 125, and a reciprocating section.

Here, the first rotating motion means 111 is constituted of the first servo motor 45 which is fixed on the frame 37 and has a third screw shaft 45c as a motor rotary shaft 45a. The first servo motor 45 is disposed such that a center line of the motor rotary shaft 45a is in parallel with the center line of the connection pipe 30 and disposed at a different axial position.

The second rotation/reciprocation conversion means 112 comprises a third screw shaft 45c provided on the rotary shaft 45a of the first servo motor 45; a third nut 46 screw-engaged with the third screw shaft 45c provided on the first servo motor 45; and a fifth linear guide 48 which is fixed on the frame 37 and supports a slider 47 in a reciprocating manner.

The thrust transmission means 125 comprises the slider 47 which is supported on the fifth linear guide 48 in a reciprocating manner and driven by the second rotation/reciprocation conversion means 112; cam followers 49 which transmit axial motion by way of a two-headed slider section 47b provided at the extremity of a slider arm section 47a of the slider 47; and a joint 50 which has the cam followers 49 and supports the first bearing 6. The reciprocating section comprises the joint 50, an oil-impregnated bearing 51 which supports the joint 50 so as to allow movement in an axial direction; and the axle 43 serving as a guide for the oil-impregnated bearing 51.

A height of a rotary shaft 49a of the cam follower 49 (i.e., the direction perpendicular to the drawing sheet) is aligned with the height of the axial center line of the connection pipe 30. The cam followers 49 are attached to the joint 50 such that the cam followers 49 and the connection pipe 30 mutually oppose and become symmetric with respect to the cross section of Fig. 2. Consequently, even when the slider arm section 47a has become deflected as a result of cantilever load (designated by arrow P in the drawing) being applied to the slide arm section 47a, the distance over which a point of contact between the cam followers 49 and the two-headed slider section 47b travels in the vertical direction is nominal. Moment load—which is disadvantageous to high-speed rotation—is not imparted to portions which follow the main shaft S; that is, the main shaft 29, the drawbar D, the connector 33, the third ball bearing 34, the joint nut 28, the connection pipe 30, the second screw 9, and the first screw 8.

The pair of cam followers 49 are also received by a notched bottom of the two-headed slider section 47b and restrained so as not to move downward. Thus, the cam followers 49 also play the role of preventing rotation of the joint 50.

The same advantageous effect is yielded even when the cam followers 49 are replaced with roller followers.

Fig. 2 illustrates an example in which a controller for the first servo motor 45 and a controller for a second servo motor 38 is embodied by a single controller.

In Fig. 2, reference numeral 52 designates a superior controller. The controller 52 controls a servo amplifier 53 for driving and controlling the first servo motor 45 and the second servo motor 38, and a relay 55 for switching between a first electromagnetic switch 54a and a second electromagnetic switch 54b, both switches being provided for the purpose of switching an output. The first electromagnetic switch 54a connects or disconnects an output from the servo amplifier 53 to the first servo motor 45. The second electromagnetic switch 54b connects or disconnects an output from the servo amplifier 53 to the second servo motor 38. The relay 55 controls the first electromagnetic switch 54a and the second electromagnetic switch 54b. An "a" contact point 55a of the relay 55 is connected to the first electromagnetic switch 54a, and a "b" contact point 55b is connected to the second electromagnetic switch 54b.

In other respects, the second embodiment is identical in configuration with the first embodiment.

Operation of the thrust converter according to the second embodiment will now be described.

First, the electromagneticbrake 27 is energized, thereby restraining rotation of the bracket 17. In turn, rotation of the main shaft 29 fixed on the bracket 17 is restrained, thereby restraining the joint nut 28 in an nonrotatable state, wherein the joint nut 28 is made movable solely in the axial direction with respect to the main shaft 29 by the second linear guide 13.

In the circuitry of the embodiment, the high level control 52 does not send any output to a relay coil 55c of the relay 55 until the chuck claw J grips the workpiece W. The second electromagnetic switch 54b connected to the "b" contact point 55b remains active. Hence, the second servo motor 38 and the servo amplifier 53 remain in a connected state, and the second .servo motor 38 is energized.

Subsequently, the second servo motor 38 is operated by way of the servo amplifier 53, thereby rotating the motor rotary shaft 38a. The drive pulley 39 fixed on the motor rotary shaft 38a decelerates or accelerates rotation of the follower pulley 40 in accordance with a gear ratio and by way of the timing belt 41. The follower pulley 40 has the spline nut 44, and rotational force is transmitted to the connection pipe 30 connected to the spline. The connection pipe 30 has the joint screw shaft 30a screw-engaged with the joint nut 28 and hence performs reciprocating motion in association with rotation. At this time, the connection pipe 30 is made rotatable by means of the third ball bearing 34 provided at the extremity of the connection pipe 30. In addition, the connector 33 is locked by the fourth linear guide 35 so as not to rotate. Hence, rotation is converted into only axial motion by the connector 33.

After the chuck claw J has gripped the workpiece W, the servo amplifier 53 outputs a positioning completion signal to the superior controller 52. Subsequently, the superior controller 52 energizes the relay coil 55c. Concurrent with the "b" contact point 55b having become deactivated, the "a" contact point 55a becomes activated. Concurrent with the second electromagnetic switch 54b being deactivated, the first electromagnetic switch 54a becomes activated, whereby the first servo motor 45 is connected to the servo amplifier 53. The electromagnetic brake 27 is released, and the first servo motor 45 is driven until predetermined workpiece gripping force develops in the chuck claw J.

When the first servo motor 45 is driven, the third nut 46 is moved axially. The slider 47 fixed on the third nut 46 is also moved axially. The joint 50 is moved in the axial direction by way of the cam follower 49. Subsequently, the chuck claw J is actuated in the same manner as that mentioned in connection with the first embodiment.

Although not illustrated, if the workpiece W is gripped at predetermined torque by means of driving the first servo motor 45, energization of the first servo motor 45 may be disconnected.

When the workpiece W that has been finished undergoing machining is released from the chuck claw J, the superior controller 52 energizes the relay coil 55c (the first electromagnetic switch 54a is activated), and the servo amplifier 53 outputs a reverse rotation position instruction to the first servo motor 45, thereby reversely rotating the first servo motor 45. The drawbar D is moved to a position at which the first electromagnetic switch 54b is activated through the foregoing operation; that is, to a position where the force with which the chuck claw J grips the workpiece W is slightly loosened. Subsequently, when the first servo motor 45 is reversely rotated to that position, the servo amplifier 53 outputs the positioning completion signal to the superior controller 52. In accordance with the signal, the superior controller 52 cuts off the output to the relaycoil 55c. Rotation of the bracket 17 is restrained by energization of the electromagnetic brake 27, thereby eventually restraining the joint nut 28 so as to render it nonrotatable.

Simultaneously with the first electromagnetic switch 54a being deactivated, the second electromagnetic switch 54b is activated. Hence, the second servo motor 38 is connected to the servo amplifier 53, and hence the second servo motor 38 is driven. Through the foregoing operation, the drawbar D, or the like, is moved to an initially-set receding position.

As has been described above, according to the second embodiment, the axial length of the thrust converter can be shortened in comparison with a required stroke. There can be obtained a thrust converter which obviates a necessity for synchronously driving the two motors 38, 45 at the time of feeding of a workpiece to a gripping position and which enables simple control of the motors.

The coupling means 118 is constituted of the joint nut 28 that is connected to the first rotation/reciprocation conversion means 115 and screw-engaged with the connection pipe 30. Hence, even when reaction force is applied to the thrust converter, the thrust converter can continuously receive reaction force without being loosened.

The output means has the connection pipe 30 to be driven by the second servo motor 31, and the connector 33 supported on the connection pipe 30 by way of the third ball bearing 34. Further, the fourth linear guide 35, which prevents rotation of the connector 33 and enables axial motion of the same, is provided between the reaction force receiving means 116 and the connector 33. Hence, reciprocating motion can be effected without driving the drawbar D fixed to the connector 33.

The first screw 8 and the second screw 9, which are rotated in conjunction with the main shaft and are of large mass, are sturdily supported on the main shaft 29 by way of the second ball bearing 20. Hence, offset developing in the core of the thrust converter is smaller than that developing in the conventional thrust converter which supports the screws with a feed screw and has been described by reference to Fig. 7. Hence, the thrust converter is advantageous for high-speed rotation.

A drive amplifier for the first servo motor 45 and that for the second servo motor 38 can be realized in the form of a single drive amplifier. Hence, an inexpensive thrust converter can be obtained.

The motors 38, 45 are arranged such that the center lines of the rotary axes of the motors are in parallel with the axial center line of the connection pipe 30 and are at different axial positions. Hence, the axial length of the thrust converter canbeshortenedfurther. Moreover, the special large-diameter rotation position detectors 1c and 31c through which the connection pipe 30 penetrate, which have been described in connection with the first embodiment, become obviated. The standard rotation position detectors 38b, 45b can be adopted, thereby contributing to cost reduction.

The first servo motor 45 of the second embodiment may be replaced with a linear motor or a cylindrical linear motor. Further, reciprocating motion of the linear motor may be transmitted to the joint 50, whichperforms reciprocating motion, by way of the thrust transmission means 125. In this case, the second rotation/reciprocation conversion means 112 becomes obviated.

Third Embodiment

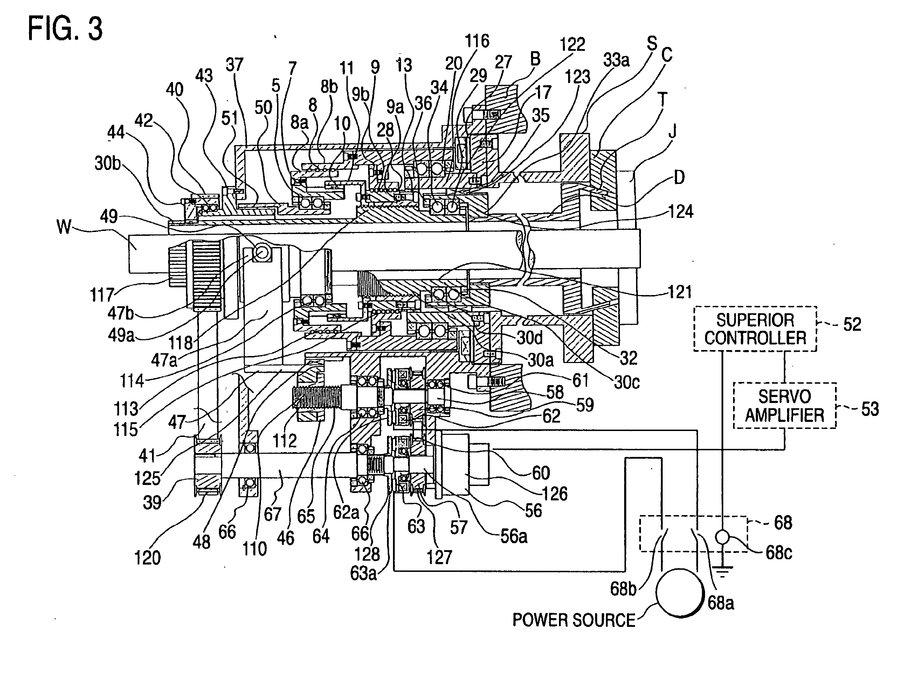

A third embodiment of the invention will be described by reference to Fig. 3.

In the third embodiment, a drive source (e.g., a motor) for the reciprocatingmotionmeans 110 and that for the arbitrary position settingmeans 117 are realizedby a single drive source. The drive source is disposed such that the axial center line of the drive source becomes in parallel with the axial center line of the connection pipe 30 and is located at a different axial position. The thrust converter of the embodiment has a changeover switch for sequentially driving the reciprocating motion means 110 and the arbitrary position setting means 117.

In Fig. 3, reference numeral 126 designates a rotating motion means which serves as a common drive source for the reciprocating motion means 110 and the arbitrary position settingmeans 117. The rotatingmotionmeans 126 is constituted of the servo motor 56 secured on the frame 37. The servo motor 56 is disposed such that the axial center line of the rotary shaft 56a of the servo motor becomes parallel with and offset from the axial center line of the connection pipe 30.

Reference 127 designates transmission means. The transmission means 127 comprises a first pulley 57 fixed on the servo motor rotary shaft 56; a fifth bearing 61 fixed on the frame 37; a first pulley support shaft 58 rotatably supported by the fifth bearing 61; a second pulley 59 fixed on the first pulley support shaft 58; a first timing belt 60 for transmitting rotational force from the first pulley 57; and first and second electromagnetic clutches 62, 63, both serving as clutch means 128 for connecting/disconnecting rotational force. The first pulley support shaft 58 is arranged such that the center axial line of the first support shaft 58 is inparallel with and radially offset from the servo motor rotary shaft 56a and at a different axial position.

The first electromagnetic clutch 62 transmits or disconnects the rotational force output from the second pulley 59 to the third screw shaft 65 provided in the second rotation/reciprocation conversion means 112, by way of a first hub 62a which is supported on the third screw shaft 65 so as to be axially movable and nonrotatable. The second electromagnetic clutch 63 transmits or disconnects the rotational force output from the rotary shaft 56a of the servo motor 56 to a second pulley support shaft 67 provided in the rotation/reciprocation conversion means 120, by way of a second hub 63a which is supported on the second pulley support shaft 67 so as to be axially movable and nonrotatable.

Reference numeral 112 designates rotation/reciprocation conversion means. The rotation/reciprocation conversion means 112 comprises a sixth bearing 64 fixed on the frame 37, a third screw shaft 65 supported on the sixth bearing shaft 64 so as to be rotatable but unmovable in the axial direction; a third nut 46 screwengaged with the third screw shaft 65; and a fifth linear guide 48 which supports the third nut 46 so as to render the third nut 46 nonrotatable and movable in only the axial direction. The third screw shaft 65 is disposed such that the center axis of the third screw shaft 65 becomes aligned with the center axis of the first pulley support shaft 58.

Reference numeral 117 designates arbitrary position setting means, and the arbitrary position setting means 117 comprises rotating motion means 126, clutch means 128, and the rotating motion conversion means 120.

Here, the rotating motion conversion means 120 comprises a seventh bearing 66 fixed on the frame 37; a second pulley support shaft 67 which is supported on the seventh bearing 66 so as to be rotatable and unmovable in the axial direction; the drive pulley 39 fixed on the second pulley support shaft 67; the follower pulley 40; the timing belt 41 for transmitting drive force; the fourth bearing 42 which supports the follower pulley 40 so as to render the follower pulley 40 rotatable and unmovable in the axial direction; the axle 43 supporting the bearing 42; the spline nut 44 for transmitting drive force from the follower pulley 40 to the spline shaft 30b; the spline shaft 30b of the connection pipe 30; the joint screw shaft 30a of the connection pipe 30; and the joint nut 28 screw-engaged with the joint screw shaft 30a. The second pulley support shaft 67 is disposed such that the center axis of the second pulley support shaft 67 becomes aligned with the center axis of the servo motor rotary shaft 56a.

Reference numeral 52 designates a superior controller. The controller 52 controls a relay 68 for switching between a first electromagnetic switch 62 and a second electromagnetic switch 63.

In other respects, the third embodiment is identical in configuration with the second embodiment.

Operation of the third embodiment will now be described.

First, the electromagnetic brake 27 is energized, thereby restraining rotation of the bracket 17. In turn, rotation of the main shaft 29 fixed on the bracket 17 is restrained, thereby restraining the joint nut 28 in an nonrotatable state, wherein the joint nut 28 is made movable solely in the axial direction with respect to the main shaft 29 by the second linear guide 13.

In the circuitry of the embodiment, the high level control 52 does not send any output to a relay coil 68c of the relay 68 until the chuck claw J grips the workpiece W. The second electromagnetic switch 63 connected to a "b" contact point 68b is connected, and the first electromagnetic clutch 62 connected to an "a" connect point 68a is disconnected.

Subsequently, the servo motor 56 is operated by way of the servo amplifier 53, thereby rotating the motor rotary shaft 56a. The second pulley support shaft 67 connected to the motor rotary shaft 38a via the second electromagnetic clutch 63 and the drive pulley 39 fixed on the second pulley support shaft 67 decelerate or accelerate rotation of the follower pulley 40 in accordance with a gear ratio and by way of the timing belt 41. The follower pulley 40 has the spline nut 44, and rotational force is transmitted to the connection pipe 30 connected to the spline. The connection pipe 30 has the joint screw shaft 30a and hence performs reciprocating motion in association with rotation. At this time, the connection pipe 30 is made rotatable bymeans of the thirdball bearing 34 provided at the extremity of the connection pipe 30. In addition, the connector 33 is locked by the fourth linear guide 35 so as not to rotate. Hence, rotation is converted into only an axial motion by the connector 33.

After the chuck claw J has gripped the workpiece W, the servo amplifier 53 outputs the positioning completion signal to the superior controller 52. Subsequently, the superior controller 52 energizes the relay coil 68c. Concurrent with the "b" contact point 68b having become deactivated, the "a" contact point 68a becomes activated. Concurrentwiththesecond electromagnetic switch 63 being disconnected, the first electromagnetic switch 62 becomes connected, whereupon rotational force of the servo motor 56 is transmitted to the second rotation/reciprocation conversion means 112. The electromagnetic brake 27 is released, and the servo motor 56 is driven until predetermined workpiece gripping force develops in the chuck claw J.

When the servo motor 56 is driven, the third nut 46 is axially moved. The slider 47 fixed on the third nut 46 is also axially moved. The joint 50 is moved in the axial direction by way of the cam follower 49. Subsequently, the chuck claw J is actuated in the same manner as that mentioned in connection with the first embodiment.

Although not illustrated, if the workpiece W is gripped at predetermined torque by means of driving the servo motor 56, energization of the servo motor 56 may be disconnected.

When the workpiece W that has been finished undergoing machining is released from the chuck claw J, the superior controller 52 energizes the relay coil 68c; and the "b" contact point 68bbecomes inactive. Concurrently, the "a" contact point 68a becomes active. Further, the servo amplifier 53 outputs the reverse rotation position instruction to the servo motor 56. The second electromagnetic clutch 63 is disconnected, and the first electromagnetic clutch 62 is simultaneously connected. As a result, the rotational force of the servo motor 56 is transmitted to the second rotation/reciprocation conversion means 112. The servo motor 56 is reversely operated through the foregoing operation up to a position at which switching between the electromagnetic clutches is performed (i.e., a position where the force with which the chuck claw J grips the workpiece J is slightly loosened).

Subsequently, when the first servo motor 45 is reversely rotated to that position, the servo amplifier 53 outputs the positioning completion signal to the superior controller 52. In accordance with the signal, the superior controller 52 cuts off the output to the relay coil 68c. Rotation of the bracket 17 is restrained by energization of the electromagnetic brake 27, thereby eventually restraining the joint nut 28 so as to render it nonrotatable.

When the output to the relay coil 68c is cut off, the second electromagnetic clutch 63 is connected simultaneously with the first electromagnetic clutch 62 being disconnected. As a result, the rotational force of the servo motor 56 is connected to the rotating motion conversion means 120, and the servo motor 56 drives the second output means 124 to the initially-set receding position through the foregoing operation.

As has been described above, according to the third embodiment, the axial length of the thrust converter can be shortened in comparison with a required stroke. There can be obtained a thrust converter which obviates a necessity for synchronously driving the two motors at the time of feeding of a workpiece to a gripping position as having been described by reference to Fig. 7; which enables simple control of the motors; and for which one motor 56 is sufficient, providing an inexpensive thrust converter.

The coupling means 118 is constituted of the joint nut 28 that is connected to the first rotation/reciprocation conversion means 115 and screw-engaged with the connection pipe 30. Hence, even when reaction force is applied to the thrust converter, the thrust converter can continuously receive reaction force without being loosened.

The output means has the connection pipe 30 to be driven by the second servo motor 31, and the connector 33 supported on the connection pipe 30 by way of the third ball bearing 34. Further, the fourth linear guide 35, which prevents rotation of the connector 33 and enables axial motion of the same, is provided between the reaction force receiving means 116 and the connector 33. Hence, reciprocating motion can be effected without driving the drawbar D fixed to the connector 33.

The first screw 8 and the second screw 9, which are rotated in conjunction with the main shaft and are of large mass, are sturdily supported on the main shaft 29 by way of the second ball bearing 20. Hence, offset developing in the core of the thrust converter is smaller than that developing in the conventional thrust converter which supports the screws with a feed screw and has been described by reference to Fig. 7. Hence, the thrust converter is advantageous for high-speed rotation.

Further, amplifiers for driving the servo motors can be realized by a single amplifier, which in turn provides an inexpensive thrust converter.

The servo motor 56 is arranged such that the center line of the rotary axis of the motor is in parallel with the axial center line of the connection pipe 30 and at a different axial position. Hence, the axial length of the thrust converter can be shortened further. Moreover, the special large-diameter rotation position detectors 1c and 31c through which the connection pipe 30 penetrate, which have been described in connection with the first embodiment, become obviated. The standard rotation position detectors 38b, 45b can be adopted, thereby contributing to cost reduction.

Although the servo motor 56 having a rotor is used as the drive source for the reciprocating motion means 110 in the third embodiment, a linear motor or a cylindrical linear motor may also be employed. In this case, reciprocation/rotation conversion means for converting reciprocating motion of the linearmotoror the cylindrical linearmotor to rotational motion must be interposedbetweenthe linearmotoror cylindrical linear motor and the connection pipe 30.

Fourth Embodiment

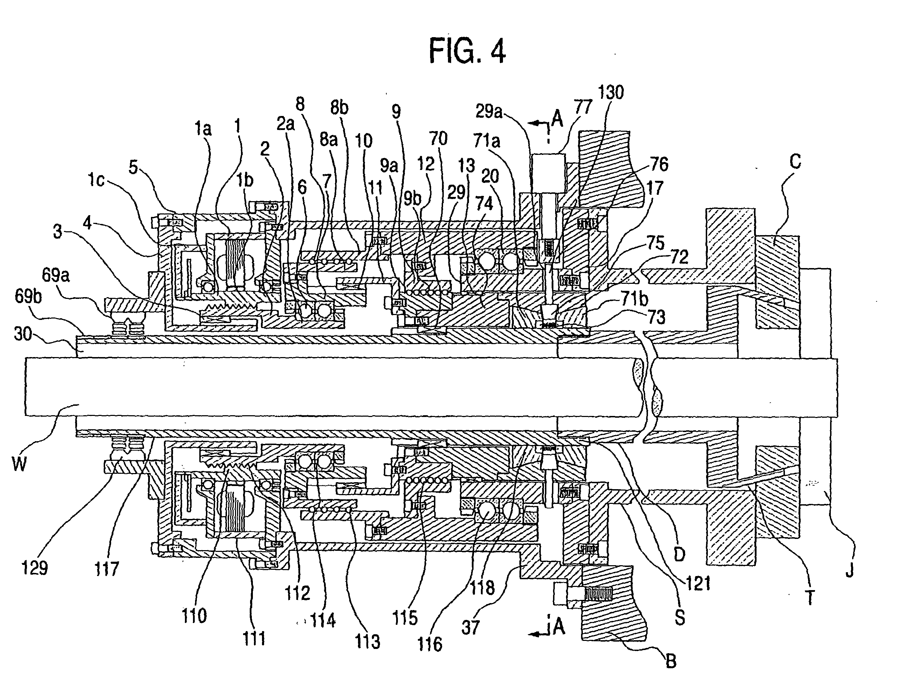

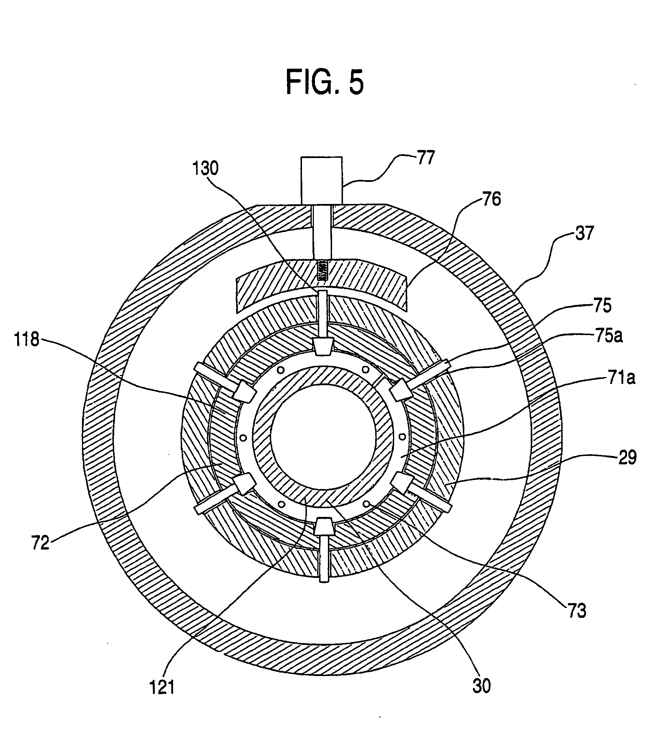

A fourth embodiment of the invention will be described by reference to Figs. 4 and 5.

In the fourth embodiment, an annular wedge is utilized as coupling means 118 to be used for connecting the first rotation/reciprocation conversion means 115 and the joint pipe 30 serving as output means. Further, a second cylindrical linear motor is utilized as means for driving the arbitrary position setting means 117.

In Fig. 4, reference numeral 117 designates arbitrary position settingmeans, and the arbitrary position settingmeans 117 is constituted of drive means 129.

The drive means 129 comprises a cylindrical linear motor coil 69a, a magnet 69b labeled to a counter-load-side circumference of the connection pipe 30, and a sixth linear guide 70 which holds a clearance between the connection pipe 30 and the linear motor coil 69a and supports them so as to allow reciprocation in the direction of the axis.

The coupling means 118 comprises the connection pipe 30; a pair of annular wedges 71a, 71b which are split and hold and release the outer periphery of the connection pipe 30; a holder 72 having an interior surface tapered at the same angle as that at which outer peripheries of the annular wedges 71a, 71b are tapered; a tension spring 73 for bringing the annular wedges 71a, 71b into close contact with the holder 72; and a guide mount 74 which is supported on the main shaft 29 so as to be nonrotatable but movable in the axial direction through use of the second linear guide 13, holds the sixth linear guide 70, and secures the holder 72. The guide mount 74 is fixed on the first rotation/reciprocation conversion means 115 with a screw.

Release means 130 comprises wedge release pins 75 whose extremities are tapered; a pin guide section 72a formed in a holder 72 which holds the wedge release pins 75; a press plate 76 which presses the wedge release pins 75 at the time of release of the wedges; and a solenoid 77 which is fixed on the frame and actuates the press plate 76.

An access hole 29a is formed in the main shaft 29. Consideration is given such that no interference arises even when the wedge release pins 75 are moved in association with axial movement of the coupling means 118. Since the holder 72 is located on the main shaft 29 so as not to rotate, the wedge release pins 75 rotate along with the main shaft S. Hence, as shown in Fig. 5, which provides a cross-sectional view taken along line A-A shown in Fig. 4, the wedge release pins 75 are arranged at uniform intervals and in a radial pattern so as to be able to operate when the shaft has come to a halt at any rotational position. Further, a portion of the press plate 76 which comes into contact with the wedge release pin 75 is formed into a semi-circular shape so as to be able to press at least one or more wedge release pins 75 at all times when the main shaft S has come to a halt at any rotational position.

In other respects, the fourth embodiment is identical in configuration with the first embodiment.

Operation of the fourth embodiment will now be described.

When only the connection pipe 30 is desired to be moved axially (e.g., when the connection pipe 30 is moved until the chuck claw J grips the workpiece W), the solenoid 77 is actuated such that the annular wedges 71a, 71b do not clamp the connection pipe 30, whereupon the wedge release pin 75 is projected toward the center of the rotary shaft. Then, the annular wedges 71a, 71b are axially moved against the tensile force of the tension spring 73, whereby a clearance arises between the annular wedges 71a, 71b and the holder 72. Consequently, the annular wedges 71a, 71b do not clamp the connection pipe 30.

Subsequently, in that state, the cylindrical linear motor coil 69a drives the cylindrical linear motor magnet 69b, thereby axially puling the connection pip 30 toward the counter-load-side. The axial action of the coupling pip 30 is converted into operation for radially operating the chuck claw J by means of the operation conversion mechanism T and by way of the drawbar D screw-engaged with the operation conversion mechanism T.

When the solenoid 77 is receded at a point in time at which the chuck claw J has gripped the workpiece W, the annular wedges 71a, 71b are brought into intimate contact with the holder 72 by means of the tension spring 73. The annular wedges 71a, 71b again clamp the connectionpipe 30 . Subsequently, operation of the linear motor coil is stopped, and the first servo motor 1 is activated and rotated at predetermined rotational torque. As a result, the third screw shaft 2 screw-engaged with the third nut 1b fixed on the motor rotary shaft 1a is moved toward the counter-load-side, because the third screw shaft 2 is located by the linear guide 3 with a detent to the guide bush 4. As a result of movement of the third screw shaft, the reciprocation/rotation conversion means 113 including the first screw shaft 8a is also moved. When the reciprocation/rotation conversion means 113 has moved toward the counter-load-side, the first screw shaft 8a is pulled.

Given that rotational torque of rotational motion of the motor rotary shaft 1a and that of the third nut 1b are taken as TM; that thrust which axially pulls toward the third screw shaft 2 is taken as F1; that a screw lead of the third screw shaft 2 is taken as L1; and that a rotation/reciprocation conversion efficiency is taken as η, we have

$$F1 = \frac{2\pi \cdot TM \cdot \eta}{L1} \qquad \text{(Eq. 1).}$$

When the first screw shaft 8a is pulled, the first nut 8b screw-engaged with the first screw shaft 8a is rotated. As a result, the thrust of axial motion of the first screw shaft 8a is converted into the rotational torque of rotational motion of the first nut 8b.

Given that the thrust which pulls the first screw shaft 8a is taken as F1; that the rotational torque of the first nut 8b is taken as T2; that the lead of the first screw shaft 8a is taken as L2; and that the reciprocation/rotation conversion efficiency is taken as η2, we have

$$T2 = \frac{L2 \cdot F1 \cdot \eta2}{2\pi} \qquad \text{(Eq. 2).}$$

When the first nut 8b has rotated, the second nut 9b fixed on the inside of the first nut 8b (i.e., at a position close to the center line of the main shaft) is also rotated, whereby the second screw shaft 9a screw-engaged with the second nut 9b is axially moved toward the counter-load-side. As a result, the rotational motion torque of the second nut 9b is converted into thrust of axial motion of the second screw shaft 12.

Given that the thus-obtained rotational torque of rotational motion of the first nut 8b and that of the second nut 9b are taken as T2; that thrust of axially motion of the second screw shaft 12 is taken as F3; that a screw lead of the second screw shaft 9a is taken as L3; and that a rotation/reciprocation conversion efficiency is taken as η3, we have

$$F3 = \frac{2\pi \cdot T2 \cdot \eta3}{L3} \qquad \text{(Eq. 3).}$$

The thrust of axial motion imparted from the first servo motor to the first shaft 8a is taken as F1, and the axial thrust developing in the second screw shaft 9a is taken as F3. From Equations 2 and 3, the following relationship is established.

$$\frac{F3}{F1} = \frac{L2}{L3}\eta c \qquad \text{(Eq. 4)}$$

where ηc is a motion conversion efficiency of a screw.

When the second screw shaft 9a is constructed with a screw lead of L2>L3, the thrust F3 developing in the second screw shaft 9a is generated by converting the thrust F1 into amplified thrust; that is, by multiplying the thrust F1 by (L2/L3)•ηc. Thrust of great axial motion can be eventually exerted on the guide mount 74 through use of the first servo motor 1 having small thrust.

When the guide mount 74 is axially pulled toward the counter-load-side by the thus-amplified thrust F3, the annular wedge 71a is pulled toward the counter-load-side by way of the holder 72 fixed on the guide mount 74.

Here, force for pulling the connection pipe 30 toward the counter-load-side is developed by means of the frictional force developing in the surface at which the annular wedge 71a and the connection pipe 30 remain in contact with each other. However, since the chuck claw J remains in contact with the workpiece W, the connection pipe 30 cannot move toward the counter-load-side. At this time, gripping force Fr is determinedby the component force developing in a contact surface where the annular wedge 71a and the holder 72 come into contact with other, provided that half the tapered angle of the annular wedge is taken as θ and axial thrust transmitted from the guide mount 74 is taken as Fi.

$$Fr = \frac{Fi}{\tan\theta} \qquad \text{(Eq. 5).}$$

The product of the radial force Fr and a frictional coefficient μ developing between the interior surface of the wedge 71a and the exterior surface of the connection pipe 30 is taken as radial gripping force Fa. Hence, when μ>tanθ, the gripping force is larger than given thrust. Thrust can be transmitted without inducing sliding between the annular wedge 71a and the contact surface of the connection pipe 30.

When the holder 72, the connection pipe 30, and the drawbar D are axially moved toward the counter-load-side, axial operation of the holder 72, that of the connection pipe 30, and that of the drawbar D are converted into the radial operation of the chuck claw J by means of the operation conversion mechanism T, whereby the chuck claw J grips the workpiece W with the amplified gripping force.

Operation for releasing the workpiece W from the chuck claw J immediately after completion of machining of the workpiece W will now be described. The motor rotary shaft 1a of the first servo motor 1 is reversely rotated at predetermined torque, and the holder 72 and the connection pipe 30 are slightly moved axially toward the load side through reverse of the operation for gripping the workpiece W, thereby releasing the chuck claw J.

In a state in which the solenoid 77 is actuated (a state in which the annular wedges 71a, 71b do not clamp the connection pipe 30, as a result of occurrence of clearance between the annular wedges 71a, 71b and the holder 72), the cylindrical linear motor coil 69a is operated, thereby activating the cylindrical linear motor magnet 69a to axially move the connection pipe 30 toward the load side.

The case where the connection pipe 30 is operated by means of pulling action has been described. However, when the connection pipe 30 is operated by pressing action, a member which grips the connection pipe 30 acts as the annular wedge 70b located at the load side in place of the annular wedge 70a. Hence, the connection pipe 30 embodies the same principle.

As has been described, according to the fourth embodiment, the axial length of the thrust converter can be shortened in comparison with a required stroke. There can be obtained a thrust converter which obviates a necessity for synchronously driving the two motors at the time of feeding of a workpiece to a gripping position and which enables simple control of the motors.

Since the linear motor is used as the drive means 129 of the arbitrary position setting means 117, driving of the connection pipe 30 does not involve any rotational motion. Hence, the electromagnetic brake 27 employed in the first embodiment for preventing following action of the main shaft 29 can be omitted.

The first screw 8 and the second screw 9, which are rotated in conjunction with the main shaft and are of large mass, are sturdily supported on the main shaft 29 by way of the second ball bearing 20. Hence, offset developing in the core of the thrust converter is smaller than that developing in the conventional thrust converter which supports the screws with a feed screw and has been described by reference to Fig. 7. Hence, the thrust converter is advantageous for high-speed. rotation.

According to the first through third embodiments, the output means is divided into two segments so as to prevent rotation of the claw T at the time of driving of the connection pipe 30. Rotatable support means, such as a ball bearing, is interposed between the two segments. The output means located at the final stage is retained so as to be axially rotatable andnonrotatable. According to the fourth embodiment, aportion of the configuration of the thrust converter required to retain the output means is obviated, and hence the configuration of the thrust converter can be simplified to a degree corresponding to the thus-obviated portion.

The fourth embodiment has described utilization of an annular wedge as the coupling means 118 for coupling the first rotation/reciprocation conversion means 115 and the connection pipe 30 serving as output means. Any member can be used as the coupling means 118, so long as the member has the function of gripping the connection pipe 30 and releasing the pipe from a gripped state when required. Needless to say, any member other than the annular wedge can be used.

The fourth embodiment has described that the cylindrical linear motor for driving the connection pipe 30 is arranged such that the axis of the linear motor is aligned with the axis of the connection pipe 30. When further shortening of the axial length of the thrust converter is desired, as mentioned in the second and third embodiments, the linear motor may be arranged such that the axis of the linear motor is out of alignment with the axis of the connection pipe 30. Further, reciprocating motion of the linear motor may be transmitted to the connection pipe 30 which performs reciprocating operation, by way of thrust transmission means having a cam follower or a roller follower.

In the fourth embodiment, the first servo motor 1 having a rotor is used as a drive source of the reciprocating motion means 110. However, a linear motor or cylindrical linear motor may be used. In this case, the second rotation/reciprocation conversion means 112 becomes obviated.

Fifth Embodiment

The embodiments have described application of the thrust converter of the invention to the chuck of the lathe. However, the thrust converter of the invention can also be applied to an injection molding machine having dies, a die-cast machine, an extruder, or a press working apparatus; a thrust converter for driving a die of a powder sintering apparatus; a thrust converter for driving a tool chuck of a machining center; and a thrust converter for pressure-welding and driving a friction welder.

As has been described, according to the invention, a thrust converter is constructed by comprising reciprocating motion means; reciprocation/rotation conversion means for converting reciprocating motion of the reciprocating motion means into rotational motion; first rotation/reciprocation conversion means for converting rotational motion of the reciprocation/rotation conversion means into reciprocating motion; reaction force receiving means for receiving reaction force of reciprocating motion of the first rotation/reciprocation conversion means; output means for outputting reciprocating motion of the first rotation/reciprocation conversion means; coupling means interposed between the first rotation/reciprocation conversion means and the output means; and arbitrary position setting means which drives the output means separately from driving force stemming from reciprocating motion of the first rotation/reciprocation conversion means and which sets an arbitrary position where the coupling means and the output means are to be coupled together. Therefore, there can be obtained a thrust converter which enables shortening of an axial length thereof in comparison with a required stroke; which obviates a necessity for operating two motors synchronously when a workpiece is fed to a gripping position or the like; and which facilitates motor control.

Further, according to the invention, a power source of the reciprocating motion means is disposed along an axis offset from an axial center line of the output means; a reciprocating section of the reciprocating motion means is disposed in line with the axial center line of the output means; and drive force of the drive source for the reciprocating motion means is transmitted to the reciprocating section of the reciprocating motion means by way of thrust transmission means. Therefore, there can be obtained an inexpensive thrust converter which enables further shortening of an axial length thereof and use of a general-purpose drive source and a general purpose position detector without use of a special drive source or a special position detector.

Further, according to the invention, the reciprocating motion means comprises a motor having a rotor, disposed along an axis offset from an axial center line of the output means; second rotation/reciprocation conversion means for converting rotational motion of the motor into reciprocating motion; a reciprocating section disposed in line with the axial center line of the output means; and thrust transmission means which is interposed between the second rotation/reciprocation conversion means and the reciprocating section and which transmits drive force of the motor to the reciprocating section. Therefore, there canbe obtained a thrust converter which enables further shortening of an axial length thereof and use of a general-purpose drive source and a general purpose position detector without use of a special drive source or a special position detector and which, by extension, is inexpensive.

Further, according to the invention, the thrust transmission means has a cam follower or a roller follower. Thrust of the drive source can be smoothly transmitted without imposing excessive moment load on the reciprocation/rotation conversion means, the first rotation/reciprocation conversion means, the output means, the coupling means, and other components.

Further, according to the invention, the coupling means is embodied as a screw member which is connected to the first rotation/reciprocation conversion means and screw-connected to the output means, therefore can continuously receive the reaction force without being loosened.

Further, according to the invention, the coupling means is an annular wedge member which is connected to the first rotation/reciprocation conversion means and which clamps and unclampsthe output means. Reciprocating motion can beeffected without any additional work of the output means and without rotating the output means. When the coupling means is a screw member and an output section on the final stage of the output means is not rotated, the output means is split into two segments. Rotatable support means, such as a ball bearing or the like, is interposed between the two segments. The output means on the final stage must be held so as to be axially movable and nonrotatable.

Further, according to the invention, a power source of the arbitrary position setting means is disposed along an axis offset from an axial center line of the output means; and drive force of the drive source of the arbitrary position setting means is transmitted to the reciprocating section of the output means by way of thrust transmission means. Therefore, there can be obtained an inexpensive thrust converter which enables further shortening of an axial length thereof and use of a general-purpose drive source and a general purpose position detector without use of a special drive source or a special position detector.

Further, according to the invention, the arbitrary position setting means comprises a motor which is disposed along an axis offset from an axial center line of the output means and has a rotor; rotational motion conversion means which converts rotational motion of a rotary shaft of the motor such that the output means performs reciprocating motion and which transmits the converted motion to the output means; and thrust transmission means which is interposed between the motor and the rotational motion conversionmeans andwhich transmits drive force of the motor to the rotational motion conversion means. Therefore, there can be obtained an inexpensive thrust converter which enables further shortening of an axial length thereof and use of a general-purpose drive source and a general purpose position detector without use of a special drive source or a special position detector and which, by extension, is inexpensive.

Further, according to the invention, the arbitrary position settingmeans is a linear motor. The rotational motion conversion means is obviated, and reciprocating motion can be effected without rotation of the output means.

Further, according to the invention, the: output means comprises first output means to be coupled with the arbitrary position setting means; second output means supported by the first output means by way of rotatable support means; and rotation prevention means which is interposed between the reaction force receivingmeans and second output means, prevents rotation of the second output means, and enables axial motion of the second output means. Hence, reciprocating motion can be effected without rotation of a final stage of the output means.

Further, according to the invention, the reciprocating motionmeans andarbitraryposition settingmeans are controlled by a single drive controller; and the thrust converter further comprises a changeover switch for sequentially and selectively driving the reciprocating motion means and the arbitrary position setting means by sequential switching connection to the drive controller. Only one drive controller is required, and control is also simplified. Hence, an inexpensive thrust converter can be obtained.

Further, according to the invention, a drive source for the reciprocating motion means and arbitrary position setting means is embodied by a single drive source; and clutch means is provided in a drive power transmission path of the drive source for the reciprocating motion means and the arbitrary position setting means, wherein drive force of the drive source is transmitted to arbitrary means from among the reciprocating motion means and the arbitrary position setting means by activating and deactivating the clutch means. Only one drive source is required, and control is also simplified. Hence, an inexpensive thrust converter can be obtained.

Further, according to the invention, the clutch means are embodied as electromagnetic clutches; the electromagnetic clutches are provided in the drive power transmission path of the drive source for the reciprocating motion means and the arbitrary position setting means, respectively; and the thrust converter further comprises a clutch changeover switch for alternately supplying power to the electromagnetic clutch provided in a drive path of the reciprocating motion means and to the electromagnetic clutch provided in a drive path of the arbitrary position setting motion means. Only one drive source is required, and control is also simplified. Hence, an inexpensive thrust converter can be obtained.

The invention also provides a thrust converter comprising: reciprocating motion means having a first motor with a rotor and second rotation/reciprocation conversion means for converting rotational motion of the first motor into reciprocatingmotion; reciprocation/rotation conversion means for converting reciprocating motion of the reciprocating motion means to rotational motion; first rotation/reciprocation conversion means which converts rotational motion of the reciprocating rotational conversion means into reciprocating motion; reaction force receiving means for receiving reaction force of reciprocating motion performed by the first reciprocating rotational conversion means; an output shaft for outputting reciprocal motion of the first rotational motion reciprocating conversion means; a screw member which is interposed betweenthe,firstrotation/reciprocation conversion means and the output shaft, is connected to the first rotation/reciprocation conversion means, and is coupled to the output shaft with a screw; a second motor with a rotator; rotational motion conversion means which converts rotational motion of a rotary shaft of the secondmotor such that the output shaft performs rotational reciprocating motion and which transmits the convertedmotion to the output shaft; and arbitrary position settingmeans which has drives the output shaft through use of the second motor and sets an arbitrary position where the screwmember and the output shaft are to be coupled together. There canbe obtained a thrust converterwhich enables shortening of an axial length thereof in comparison with a required stroke; which obviates a necessity for operating two motors synchronously when a workpiece is fed to a gripping position or the like; and which facilitates motor control. Moreover, even when reaction force is applied to the thrust converter, the thrust converter can continuously receive the reaction force without being loosened.

The invention also provides a thrust converter comprising: reciprocating motion means having a first motor with a rotor and second rotation/reciprocation conversion means for converting rotational motion of the first motor into reciprocating motion; reciprocation/rotation conversion means for converting reciprocating motion of the reciprocating motion means to rotational motion; first rotation/reciprocation conversion means which converts rotational motion of the reciprocating rotational conversion means into reciprocating motion; reaction force receiving means for receiving reaction force of reciprocating motion performed by the first reciprocating rotational conversion means; an output shaft for outputting reciprocal motion of the first rotational/reciprocating conversion means; a screw member which is interposed between the first rotation/reciprocation conversion means and the output shaft, is connected to the first rotation/reciprocation'conversion means, and is coupled to the output shaft with a screw; a second motor with a rotator; rotational motion conversion means which converts rotational motion of a rotary shaft of the secondmotor such that the output means performs rotational reciprocating motion and which transmits the converted motion to the output shaft; arbitrary position setting means which has drives the output shaft through use of the second motor and sets an arbitrary position where the screw member and the output shaft are to be coupled together, wherein the first motor of the reciprocating motion means and the second motor of the arbitrary position setting means are disposed such that a rotary shaft of the first motor and a rotary shaft of the second motor are in parallel with an axial center line of the output shaft and located at different axial positions; and thrust transmission means for transmitting drive force of the first motor and drive force of the second motor to the reciprocation/rotation conversion means and the output shaft, respectively. Hence, there can be obtained a thrust converter which enables shortening of an axial length thereof in comparison with a required stroke; which obviates a necessity for operating two motors synchronously when a workpiece is fed to a gripping position or the like; and which facilitates motor control. Moreover, even when reaction force is applied to the thrust converter, the thrust converter can continuously receive reaction force without being loosened. Therefore, there can be obtained an inexpensive thrust converter which enables further shortening of an axial length thereof and use of a general-purpose drive source and a general purpose position detector without use of a special drive source or a special position detector.

The invention also provides a thrust converter comprising: reciprocating motion means; reciprocation/ rotation conversion means for converting reciprocating motion of the reciprocating motion means into rotational motion; first rotation/reciprocation conversion means for converting rotational motion of the reciprocation/rotation conversion means into reciprocating motion; reaction force receiving means for receiving reaction force of reciprocating motion of the first rotation/reciprocation conversion means; an output shaft for outputting reciprocal motion of the first rotational/reciprocating conversion means; a screw member which is interposed between the first rotation/reciprocation conversion means and the output shaft, is connected to the first rotation/reciprocation conversion means, and is coupled to the output shaft with a screw; arbitrary position setting means which drives the output means separately from driving force stemming from reciprocating motion of the first rotation/reciprocation conversion means and which sets an arbitrary position where the couplingmeans and the output means are to be coupled together; a drive source for the reciprocating motionmeans andarbitraryposition settingmeans being embodied by a single source; and clutch means provided in a drive power transmission path of the drive source for the reciprocating means and the arbitrary position setting means, wherein drive force of the drive source is transmitted to arbitrary means from among the reciprocating motion means and the arbitrary position settingmeans by activating and deactivating the clutch means. Hence, there can be obtained a thrust converter which enables shortening of an axial length thereof in comparison with a required stroke; which obviates a necessity for operating two motors synchronously when a workpiece is fed to a gripping position or the like; and which facilitates motor control. Moreover, even when reaction force is added to the thrust converter, the thrust converter can continuously receive reaction force without being loosened. Only one drive source is required, and control is simplified. Hence, an inexpensive thrust converter can be obtained.

The invention also provides a thrust converter comprising: reciprocating motion means having a first motor with a rotor and second rotation/reciprocation conversion means for converting rotational motion of the first motor into reciprocating motion; reciprocation/rotation conversion means for converting reciprocating motion of the reciprocating motion means; first rotation/reciprocation conversion means which converts rotational motion of the reciprocating rotational conversion means into reciprocating motion; reaction force receiving means for receiving reaction force of reciprocating motion performed by the first reciprocating rotational conversion means; an output shaft for outputting reciprocal motion of the first rotational motion reciprocating conversion means; an annular wedge member which is interposed between the first rotation/reciprocation conversion means and the output shaft, is connected to the first rotation/reciprocation conversion-means,.and clamps and unclamps the output means; and a linear motor which is driven while the output shaft is released from the annular wedge member and sets an arbitrary position where the annular wedge member and the output shaft are to be coupled together. Hence, there can be obtained a thrust converter which enables shortening of an axial length thereof in comparison with a required stroke; which obviates a necessity for operating two motors synchronously when a workpiece is fed to a gripping position or the like; and which facilitates motor control. Reciprocating motion can be effected without any additional work of the output means, by obviating the rotational motion conversion means, and without rotating the output means.

Industrial Applicability

A thrust converter of the invention is preferable for use in driving primarily a clamper which clamps a tool and a workpiece in various industrial machines, such as an injection molding machine having dies, a die-cast machine, an extruder, a press working apparatus; or as a thrust converter for driving a die of a powder sintering apparatus, a thrust converter for driving a work chuck of a lathe or a tool chuck of a machining center, or. a thrust converter for pressure-welding and driving a friction welder.

**Claims**

**1.** A thrust converter comprising:

reciprocating motion means;
reciprocation/rotation conversion means for converting reciprocating motion of the reciprocating motion means into rotational motion;

first rotation/reciprocation conversion means for converting rotational motion of the reciprocation/rotation conversion means into reciprocating motion;

reaction force receiving means for receiving reaction force of reciprocating motion of the first rotation/reciprocation conversion means;

output means for outputting reciprocating motion of the first rotation/reciprocation conversion means;

coupling means interposed between the first rotation/reciprocation conversion means and the output means; and

arbitrary position setting means which drives the output means separately fromdriving force stemming from reciprocating motion of the first rotation/reciprocation conversion means and which sets an arbitrary position where the coupling means and the output means are to be coupled together.

2. The thrust converter according to claim 1, wherein the reciprocating motion means comprises

a motor having a rotor; and

second rotation/reciprocation conversion means for converting rotational motion of a rotation axis of the motor into reciprocating motion.

3. The thrust converter according to claim 1, wherein a power source of the reciprocating motion means is disposed along an axis offset from an axial center line of the output means; a reciprocating section of the reciprocating motion means is disposed in line with the axial center line of the output means; and drive force of the drive source of the reciprocating motion means is transmitted to the reciprocating section of the reciprocating motion means by way of thrust transmission means.

4. The thrust converter according to claim 1, wherein the reciprocating motion means comprises

a motor having a rotor which is disposed along an axis offset from an axial center line of the output means;

second rotation/reciprocation conversion means for converting rotational motion of the motor into reciprocating motion;

a reciprocating section disposed in line with the axial center line of the output means; and

thrust transmission means which is interposed between the second rotation/reciprocation conversion means and the reciprocating section and which transmits drive force of the motor to the reciprocating section.

5. The thrust converter according to claim 3 or 4, wherein the thrust transmission means has a cam follower or a roller follower.

6. The thrust converter according to claim 1, wherein the coupling means is a screw member which is connected to the first rotation/reciprocation conversion means and screw-connected to the output means.

7. The thrust converter according to claim 1, wherein the coupling means is an annular wedge member which is connected to the first rotation/reciprocation conversion means and which clamps and unclamps the output means.

8. The thrust converter according to claim 1, wherein the arbitrary position setting means has

a motor having a rotor; and

rotational motion conversion means which converts rotational motion of the rotational axis of the motor such that the output means performs reciprocating motion and which transmits the converted motion to the output means.

9. The thrust converter according to claim 1, wherein a power source of the arbitrary position setting means is disposed along an axis offset from an axial center line of the output means; and drive force of the drive source of the arbitrary position setting means is transmitted to the reciprocating section of the output means by way of thrust transmission means.

10. The thrust converter according to claim 1, wherein the arbitrary position setting means comprises

a motor which is disposed along an axis offset from an axial center line of the output means and has a rotor;

rotational motion conversion means which converts rotational motion of a rotary shaft of the motor such that the output means performs reciprocating motion and which transmits the converted motion to the output means; and

thrust transmission means which is interposed between the motor and the rotational motion conversion means and which transmits drive force of the motor to the rotational motion conversion means.

11. The thrust converter according to claim 1, wherein the arbitrary position setting means is a linear motor.

12. The thrust converter according to claim 1, wherein the output means comprises

first output means to be coupled with the arbitrary position setting means;

second output means supported by the first output means by way of rotatable support means; and

rotation prevention means which is interposed between the reaction force receiving means and second output means, prevents rotation of the second output means, and enables axial motion of the second output means.

13. The thrust converter according to claim 1, wherein the reciprocating motion means and arbitrary position setting means are controlled by a single drive controller; and further comprising a changeover switch for sequentially and selectively driving the reciprocating motion means and the arbitrary position setting means by sequential switching connection to the drive controller.

14. The thrust converter according to claim 1, wherein a drive source for the reciprocating motion means and a drive source for arbitrary position setting means is embodied by a single drive source; and clutch means is provided in a drive power transmission path of the drive source for the reciprocating means and the arbitrary position setting means, wherein drive force of the drive source is transmitted to arbitrary means from among the reciprocating motion means and the arbitrary position settingmeansby activating and deactivating the clutch means.

15. The thrust converter according to claim 14, wherein the clutch means are embodied as electromagnetic clutches; the electromagnetic clutches are provided in the drive power transmission path of the drive source for the reciprocating means and the arbitrary position setting means, respectively; and further comprising a clutch changeover switch for alternately supplying power to the electromagnetic clutch provided in a drive path of the reciprocating motion means and to the electromagnetic clutch provided in a drive path of the reciprocating motion means.

16. A thrust converter comprising:

reciprocating motion means having a first motor with a rotor and second rotation/reciprocation conversion means for converting rotational motion of the first motor into reciprocating motion; reciprocation/rotation conversion means for converting reciprocating motion of the reciprocating motion means into rotational motion; first rotation/reciprocation conversion means which converts rotational motion of the reciprocating rotational conversion means into reciprocating motion; reaction force receiving means for receiving reaction force of reciprocating motion performed by the first reciprocating rotational conversion means; an output shaft for outputting reciprocal motion of the first rotational motion reciprocating conversion means; a screw member which is interposed between the first rotation/reciprocation conversion means and the output shaft, is connected to the first rotation/reciprocation conversion means, and is coupled to the output shaft with a screw; a second motor with a rotator;

rotational motion conversion means which converts rotational motion of a rotary shaft of the second motor such that the output means performs rotational reciprocating motion and which transmits the converted motion to the output shaft; and arbitrary position setting means which drives the output shaft through use of the second motor and arbitrarily sets a position where the screw member and the output shaft are to be coupled together.

17. A thrust converter comprising:

reciprocating motion means having a first motor with a rotor and second rotation/reciprocation conversion means for converting rotational motion of the first motor into reciprocating motion; reciprocation/rotation conversion means for converting reciprocating motion of the reciprocating motion means; first rotation/reciprocation conversion means which converts rotational motion of the reciprocating rotational conversion means into reciprocating motion; reaction force receiving means for receiving reaction force of reciprocating motion performed by the first reciprocating rotational conversion means; an output shaft for outputting reciprocal motion of the first rotational motion reciprocating conversion means; a screw member which is interposed between the first rotation/reciprocation conversion means and the output shaft, is connected to the first rotation/reciprocation conversion means, and is coupled to the output shaft with a screw; a second motor with a rotator; rotational motion conversion means which converts rotational motion of a rotary shaft of the secondmotor such that the output means performs rotational reciprocating motion and which transmits the converted motion to the output shaft; arbitrary position setting means which drives the output shaft through use of the second motor and sets an arbitrary position where the screw member and the output shaft are to be coupled together, wherein the first motor of the reciprocating motion means and the second motor of the arbitrary position setting means are disposed such that a rotary shaft of the first motor and a rotary shaft of the second motor are in parallel with an axial center line of the output shaft and located at different axial positions; and

thrust transmission means for transmitting drive force of the first motor and drive force of the second motor to the reciprocation/rotation conversion means and the output shaft, respectively.

18. A thrust converter comprising:

reciprocating motion means;

reciprocation/rotation conversion means for converting reciprocating motion of the reciprocating motion means into rotational motion;

first rotation/reciprocation conversion means for converting rotational motion of the reciprocation/rotation conversion means into reciprocating motion;

reaction force receiving means for receiving reaction force of reciprocating motion of the first rotation/reciprocation conversion means;

an output shaft for outputting reciprocal motion of the first rotational motion reciprocating conversion means;

a screw member which is interposed between the first rotation/reciprocation conversion means and the output shaft, is connected to the first rotation/reciprocation conversion means, and is coupled to the output shaft with a screw;

arbitrary position setting means which drives the output means separately from driving force stemming from reciprocating motion of the first rotation/reciprocation conversion means and which sets an arbitrary position where the coupling means and the output means are to be coupled together;

a drive source for the reciprocating motion means and a drive source for arbitrary position setting means being embodied by a single drive source; and

clutch means provided in a drive power transmission path of the drive source for the reciprocating means and the arbitrary position setting means, wherein drive force of the drive source is transmitted to arbitrary means from among the reciprocating motion means and the arbitrary position setting means by activating and deactivating the clutch means.

19. A thrust converter comprising:

reciprocating motion means having a first motor with a rotor and second rotation/reciprocation conversion means for converting rotational motion of the first motor into reciprocating motion;

reciprocation/rotation conversion means for converting reciprocating motion of the reciprocating motion means;

first rotation/reciprocation conversion means which converts rotational motion of the reciprocating rotational conversion means into reciprocating motion;

reaction force receiving means for receiving reaction force of reciprocating motion performed by the first reciprocating rotational conversion means;

an output shaft for outputting reciprocal motion of the first rotational motion reciprocating conversion means;

an annular wedge member which is interposed between the first rotation/reciprocation conversion means and the output shaft, is connected to the first rotation/reciprocation conversion means, and clamps and unclamps the output means; and

a linear motor which is driven while the output shaft is released from the annular wedge member and sets an arbitrary position where the annular wedge member and the output shaft are to be coupled together.

# FIG. 1

EP 1 455 118 A1

FIG. 2

# FIG. 3

EP 1 455 118 A1

SUPERIOR CONTROLLER — 52

SERVO AMPLIFIER — 53

POWER SOURCE

# FIG. 4

EP 1 455 118 A1

# FIG. 5

FIG. 6

FIG. 7

EP 1 455 118 A1

EP 1 455 118 A1

## INTERNATIONAL SEARCH REPORT

| | International application No. |
|---|---|
| | PCT/JP01/10987 |

| A. CLASSIFICATION OF SUBJECT MATTER |
|---|
| Int.Cl$^7$   F16H 25/20, B23B31/165, B23B31/26, B23Q 3/12 |

According to International Patent Classification (IPC) or to both national classification and IPC

| B. FIELDS SEARCHED |
|---|
| Minimum documentation searched (classification system followed by classification symbols) |
| Int.Cl$^7$   F16H 25/20 - F16H 25/24<br>      B23B 31/00 - B23B 31/42, B23Q 3/12 |

| Documentation searched other than minimum documentation to the extent that such documents are included in the fields searched |
|---|
| Jitsuyo Shinan Koho        1926-1996      Toroku Jitsuyo Shinan Koho  1994-2002<br>Kokai Jitsuyo Shinan Koho  1971-2002      Jitsuyo Shinan Toroku Koho  1996-2002 |

| Electronic data base consulted during the international search (name of data base and, where practicable, search terms used) |
|---|
| |

| C. | DOCUMENTS CONSIDERED TO BE RELEVANT | |
|---|---|---|
| Category* | Citation of document, with indication, where appropriate, of the relevant passages | Relevant to claim No. |
| A | JP 1-247866 A (BROTHER INDUSTRIES, LTD.),<br>03 October, 1989 (03.10.1989),<br>drawings    (Family: none) | 1-19 |
| A | WO 91/05698 A1 (BELL HELICOPTER TEXTRON INC.),<br>02 May, 1991 (02.05.1991),<br>Fig. 6,<br>& JP 4-503562 A, Fig. 6<br>& US 5092539 A | 1-19 |
| A | JP 3-213753 A (Nippon Thomson K.K.),<br>19 September, 1991 (19.09.1991),<br>Figs. 1, 2    (Family: none) | 1-19 |
| A | JP 62-34708 A (Shinnko Electric Co., Ltd.),<br>14 February, 1987 (14.02.1987),<br>Fig. 1    (Family: none) | 1-19 |
| A | JP 63-191508 A (Shinnko Electric Co., Ltd.),<br>09 August, 1988 (09.08.1988),<br>Fig. 1    (Family: none) | 1-19 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 January, 2002 (10.01.02) | 29 January, 2002 (29.01.02) |

| Name and mailing address of the ISA/ | Authorized officer |
|---|---|
| Japanese Patent Office | |
| Facsimile No. | Telephone No. |

Form PCT/ISA/210 (second sheet) (July 1992)

33

## INTERNATIONAL SEARCH REPORT

| International application No. |
| --- |
| PCT/JP01/10987 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 01/51239 A1 (Mitsubishi Electric Corporation), 19 July, 2001 (19.07.2001), Fig. 3   (Family: none) | 1-19 |
| A | JP 2-9521 A (Shinnko Electric Co., Ltd.), 12 January, 1990 (12.01.1990), Fig. 1   (Family: none) | 1-19 |

Form PCT/ISA/210 (continuation of second sheet) (July 1992)